(19) Europäisches Patentamt
European Patent Office
Office européen des brevets

(11) EP 3 012 237 B1

(12) EUROPEAN PATENT SPECIFICATION

(45) Date of publication and mention of the grant of the patent:
**21.10.2020 Bulletin 2020/43**

(21) Application number: **14813958.7**

(22) Date of filing: **19.06.2014**

(51) Int Cl.:
***C04B 28/14*** (2006.01) ***C04B 40/00*** (2006.01)
***C04B 24/26*** (2006.01) ***C08L 33/06*** (2006.01)
*C04B 103/40* (2006.01)

(86) International application number:
**PCT/JP2014/066241**

(87) International publication number:
**WO 2014/203953 (24.12.2014 Gazette 2014/52)**

# (54) LIQUID DISPERSANT COMPOSITION FOR GYPSUM

FLÜSSIGE DISPERGIERMITTELZUSAMMENSETZUNG FÜR GIPS

COMPOSITION DE DISPERSANT LIQUIDE POUR GYPSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2013 JP 2013128433**

(43) Date of publication of application:
**27.04.2016 Bulletin 2016/17**

(73) Proprietors:
- **Kao Corporation**
**Chuo-Ku**
**Tokyo 103-8210 (JP)**
- **Yoshino Gypsum Co., Ltd.**
**Chiyoda-ku**
**Tokyo 100-0005 (JP)**

(72) Inventors:
- **YOSHINAMI, Yusuke**
**Wakayama-shi, Wakayama 640-8580 (JP)**
- **HAMAI, Toshimasa**
**Wakayama-shi, Wakayama 640-8580 (JP)**
- **SUZUKI, Kenichi**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 052 232** **WO-A1-2008/032799**
**GB-A- 2 319 522** **JP-A- H10 158 051**
**JP-A- H11 302 052** **JP-A- 2003 002 718**
**JP-A- 2011 529 432** **JP-A- 2012 132 017**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

Field of the Invention

The present invention relates to a liquid dispersant composition for gypsum, and a gypsum slurry.

The present invention also relates to a method for producing a gypsum slurry, use of a dispersant for gypsum, and a method for producing a liquid dispersant composition for gypsum.

Background of the Invention

In a gypsum-water slurry used for a gypsum board, a naphthalenesulfonic acid-formaldehyde condensate has been used as a water reducing agent. In recent years, substitution thereof is being made to a polycarboxylic acid water reducing agent having no risk of generation of formaldehyde, which is to be said as one of the causative substances of the sick building syndrome. On the other hand, the raw materials of gypsum are diversifying, and phosphogypsum, which is a by-product in production of phosphoric acid as fertilizer, is increasingly used.

In gypsum with high quality, it has been known that the use of a polycarboxylic acid water reducing agent increases the water reducing effect, and also increases the flowability, as compared to a naphthalenesulfonic acid-formaldehyde condensate. However, it has been found that the use of a polycarboxylic acid water reducing agent in phosphogypsum disadvantageously lowers both the water reducing effect and the flowability.

JP-A-10-158051 discloses the by-product gypsum-water slurry containing a polycarboxylic acid dispersant and having a slurry pH of from 5 to 10, and the production method thereof, also discloses that the pH is adjusted by the addition of a basic substance, and discloses in the examples thereof that the slurry is prepared by using by-product hemihydrate phosphogypsum and a polycarboxylic acid dispersant, and the pH is adjusted with calcium hydroxide.

JP-A-2003-335566 discloses the method for improving excellent flowability and flowability retention property of a hydraulic composition in the case where two kinds of polycarboxylic acid dispersants are used in combination, without influence of the variation of hydraulic powder, such as cement, and a liquid admixture for a hydraulic composition excellent in storage stability that is capable of being used in the method, and discloses that the suitable amounts of the two kinds of dispersants may be determined by controlling the neutralization degree and the like of the admixture with the electroconductivity, and as a result, the excellent dispersion capability and the storage stability of the admixture may be obtained.

US-A-3, 181, 985 discloses that the addition of ammonia to a gypsum slurry of by-product gypsum containing phosphoric acid as an impurity may enhance the adhesion to paper on molding a gypsum board.

US-A-5,151,130 discloses the method for decreasing the consistency of a gypsum slurry by adding a polyalkylenepolyamine having a molecular weight of 1,000 or less to the gypsum slurry.

WO-A-2013/137402 discloses a dispersant for gypsum containing a polycarboxylic acid polymer and a polymer obtained through a reaction of an alkylenediamine and/or a monoamine and an epihalohydrin as essential components; and discloses that the dispersant provides an excellent improvement effect of the flowability of the gypsum slurry even though gypsum raw materials different in quality are used, and prevents the hardening retardation of the gypsum slurry.

GB 2319522 describes an aqueous slurry of a by-produced gypsum, having a pH of 5 to 10, which contains as plasticizer a copolymer prepared by polymerizing a polyalkylene glycol monoester monomer (a) containing 2 to 300 C2 -C3 oxyalkylene molecules with at least one monomer (b) selected from among unsaturated monocarboxylic acids, unsaturated dicarboxylic acids and allylsulfonic acids.

EP 1 052 232 relates to a process for producing a powdery dispersant for preparing hydraulic compositions, which process includes adding an reducing agent to a solution predominantly containing a polycarboxylate polymer compound having a polyalkylene glycol chain, drying the resultant mixture, and pulverizing the dried product; the resultant powdery dispersant for preparing hydraulic compositions; and a hydraulic composition containing the dispersant.

JP 2003-002718 describes an admixture for a gypsum composition, which consists of a copolymer mixture obtained by copolymerizing a specified monomer A1 such as ethylene type unsaturated carboxylic acid derivative having polyoxyalkylene groups and a specified monomer A2 such as (meth)acrylic acid and has the molar ratio A1/A2 which is changed at least one time in the process of reaction.

Summary of the Invention

The present invention relates to a gypsum slurry containing gypsum, (A) a copolymer obtained through polymerization of a monomer containing a monomer (A1) represented by the following general formula (A1) and a monomer (A2) represented by the following general formula (A2) (which is hereinafter referred to as a component (A)), (B) a nitrogen-containing compound (which is hereinafter referred to as a component (B)), and water,
in the component (A), a ratio of a mass of the monomer (A2) with respect to a total mass of the monomer (A1) and the

monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups,
the alkylalkanolamine as the component (B) being an alkylalkanolamine having 2 or more and 10 or less carbon atoms and having 1 or 2 alkyl groups,
a content of the component (A) being 0.005 parts by mass or more and 1.0 part by mass or less per 100 parts by mass of gypsum,
a mass ratio of the component (A) and the component (B), (A)/(B), being 0.2 or more and 25 or less, and
the gypsum slurry having pH of 6 . 0 or more and 9.0 or less at 20°C:

[Formula 3]

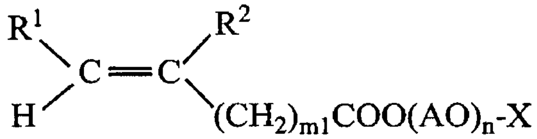

(A1)

wherein

R¹ and R² each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 4]

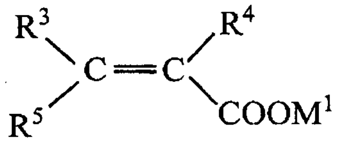

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom or, an alkali metal; and
m2 represents an integer of 0 or more and 2 or less.

The present invention also relates to a method for producing a gypsum slurry having pH of 6.0 or more and 9.0 or less at 20°C, containing the following steps:

step 1: a step of mixing a component (A), a component (B), and water to provide a liquid composition for preparing gypsum, wherein the component (A) and the component (B) are mixed in a mass ratio, (A)/(B), of 0.2 or more and 25 or less; and
step 2: a step of mixing the liquid composition for preparing gypsum obtained in the step 1 and gypsum to provide a gypsum slurry,

the component (A) being a copolymer obtained through polymerization of a monomer containing a monomer (A1) represented by the following general formula (A1) and a monomer (A2) represented by the following general formula (A2), and the component (B) being a nitrogen-containing compound,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups, and
the alkylalkanolamine as the component (B) being an alkylalkanolamine having 2 or more and 10 or less carbon atoms and having 1 or 2 alkyl groups,

[Formula 5]

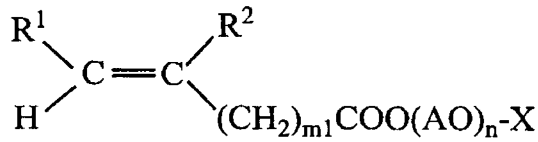

(A1)

wherein

R1 and R2 each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 6]

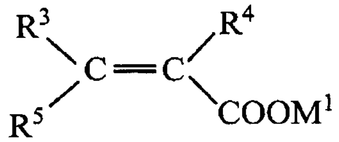

(A2)

wherein

$R^3$, $R^4$ and $R^5$ each independently represent a hydrogen atom, a methyl group, or $(CH_2)_{m2}COOM^2$ ;
$M^1$ and $M^2$ each independently represent a hydrogen atom or an alkali metal; and
m2 represents an integer of 0 or more and 2 or less.

The present invention also relates to use of a composition containing a component (A) a component (B) and water, as a dispersant for gypsum for enhancing flowability of a gypsum slurry,
the pH of the composition being 7.0 or more and 13.0 or less at 20°C,
a content of the component (A) being 5% by mass or more and 60% by mass or less in the composition,
a mass ratio of the component (A) and the component (B), (A)/(B), being 0.2 or more and 25 or less in the composition,
the component (A) being a copolymer obtained through polymerization of a monomer containing a monomer (A1) represented by the following general formula (A1) and a monomer (A2) represented by the following general formula (A2), and the component (B) being a nitrogen-containing compound,
in the component (A), a ratio of a mass of the monomer (A2) with respect to a total mass of the monomer (A1) and the

monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups, and
the alkylalkanolamine as the component (B) being an alkylalkanolamine having 2 or more and 10 or less carbon atoms and having 1 or 2 alkyl groups,

[Formula 7]

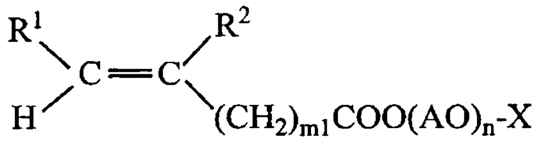

(A1)

wherein

$R^1$ and $R^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 8]

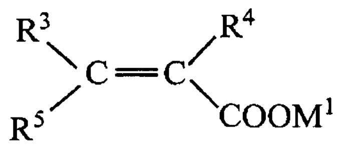

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom or an alkali metal; and
m2 represents an integer of 0 or more and 2 or less.

The present invention also relates to a method for producing a liquid dispersant composition for gypsum, containing mixing (A) a copolymer obtained through polymerization of a monomer containing a monomer (A1) represented by the following general formula (A1) and a monomer (A2) represented by the following general formula (A2) (which is hereinafter referred to as a component (A)), (B) a nitrogen-containing compound (which is hereinafter referred to as a component (B)), and water,
the component (A) being mixed in an amount of 5% by mass or more and 60% by mass or less based on the total mixed materials,
the component (A) and the component (B) being mixed in a mass ratio, (A)/(B), of 0.2 or more and 25 or less,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,

the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups,
the alkylalkanolamine as the component (B) being an alkylalkanolamine having 2 or more and 10 or less carbon atoms and having 1 or 2 alkyl groups, and
the liquid dispersant composition for gypsum having pH of 7.0 or more and 13.0 or less at 20°C:

[Formula 9]

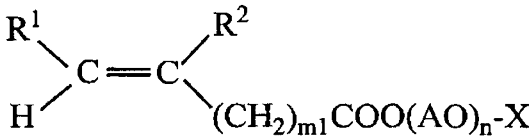

(A1)

wherein

R1 and R2 each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 10]

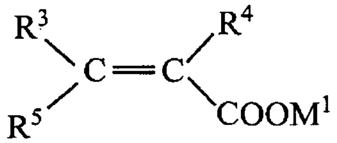

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom or an alkali metal; and
m2 represents an integer of 0 or more and 2 or less.

Description of Embodiments

A water reducing agent used for preparing a gypsum slurry is preferably in the form of a one-component liquid agent from the standpoint of preventing the production facilities from being increased, the standpoint of enhancing the handleability, and the like. In this case, as in JP-A-10-158051, a slurry using by-product gypsum, such as phosphogypsum, effectively exhibits the effect of the water reducing agent at a relatively high pH value (i.e., slurry pH that is equivalent to a slurry using ordinary gypsum is used), and therefore, it may be considered that an alkali agent is added to the water reducing agent. However, it has been found that in the case where an alkali agent, such as sodium hydroxide and calcium hydroxide, is added to a polycarboxylic acid water reducing agent to form a one-component liquid agent, there is a problem that the stability thereof immediately after the production and after storage is deteriorated.
The present invention uses a one-component liquid dispersant composition for gypsum that is excellent in stability and is capable of providing a gypsum slurry excellent in flowability, and provides a gypsum slurry containing the same.
The present invention is also to provide a method for producing a gypsum slurry, use as a dispersant for gypsum, and a method for producing a liquid dispersant composition for gypsum.
According to the present invention, a one-component liquid dispersant composition for gypsum that is excellent

in stability and is capable of providing a gypsum slurry excellent in flowability is provided, and a gypsum slurry containing the same is provided.

According to the present invention, a gypsum slurry that is excellent in flowability is obtained, and a method for producing a gypsum slurry is provided.

According to the present invention, use of the composition containing the component (A) and the component (B), as a dispersant for gypsum that is excellent in stability and is capable of providing a gypsum slurry excellent in flowability is provided.

According to the present invention, a method for producing a liquid dispersant composition for gypsum that is excellent in stability and is capable of providing a gypsum slurry excellent in flowability is provided.

Liquid Dispersant Composition for Gypsum

In the monomer (A1) represented by the general formula (A1) as a constitutional monomer of the component (A), in the general formula (A1), $R^1$ preferably represents a hydrogen atom, $R^2$ preferably represents a methyl group, m1 preferably represents 0, and AO preferably represents an alkyleneoxy group having 2 carbon atoms, from the standpoint of the flowability of the gypsum slurry. In the general formula (A1), n represents an average addition molar number of AO, which is a number of 4 or more and 300 or less, and is preferably 9 or more, more preferably 23 or more, further preferably 80 or more, furthermore preferably 100 or more, and furthermore preferably 110 or more from the standpoint of the flowability of the gypsum slurry. In the general formula (A1), n is preferably 200 or less, more preferably 150 or less, and further preferably 130 or less. In the case where two or more kinds of the monomers (A) are used, n represents an average addition molar number of the total copolymer.

In the general formula (A1), X represents a hydrogen atom or an alkyl group having 1 or more and 3 or less carbon atoms, and is preferably an alkyl group having 1 carbon atom from the standpoint of the flowability of the gypsum slurry.

In the monomer (A2) represented by the general formula (A2) as a constitutional monomer of the component (A), in the general formula (A2), $R^3$ preferably represents a hydrogen atom, $R^4$ preferably represents a methyl group, and $R^5$ preferably represents a hydrogen atom, from the standpoint of the flowability of the gypsum slurry. Accordingly, the monomer (A2) is preferably methacrylic acid, or an alkali metal salt, an alkaline earth metal salt (1/2 atom), an amine salt, or an ammonium salt of methacrylic acid.

In the general formula (A2), $M^1$ and $M^2$ each independently represent a hydrogen atom or an alkali metal. Examples of the alkali metal include sodium and potassium.

In the component (A), the ratio of the mass of the monomer (A2) with respect to a total mass of the monomer (A1) and the monomer (A2) is 4% by mass or more, preferably 5% by mass or more, more preferably 7% by mass or more, and further preferably 10% by mass or more, and is preferably less than 100% by mass, more preferably 50% by mass or less, further preferably 25% by mass or less, and furthermore preferably 20% by mass or less from the standpoint of the flowability of the gypsum slurry.

The constitutional monomers of the component (A) may contain a monomer other than the monomer (A1) and the monomer (A2), and the total amount of the monomer (A1) and the monomer (A2) in the constitutional monomers is preferably 90% by mass or more, and more preferably 95% by mass or more, and is preferably 100% by mass or less, which may be 100% by mass.

The component (A) preferably has a weight average molecular weight of 10,000 or more, more preferably 20,000 or more, and further preferably 50,000 or more, and of preferably 200,000 or less, and more preferably 100,000 or less. The weight average molecular weight herein is measured by a gel permeation chromatography (GPC) method under the following conditions.

GPC Conditions

Column: G4000PWXL + G2500PWXL (Tosoh Corporation)
Eluent: 0.2 M phosphate buffer / $CH_3CN$ = 9/1
Flow rate: 1.0 mL/min
Column temperature: 40°C
Detection: RI
Sample size: 0.5 mg/mL
Standard substance: polyethylene glycol conversion

The component (B) is one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine (preferably having an average condensation number of ethyleneimino groups of 4 or more, and more preferably 5 or more).

The alkylamine as the component (B) is an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms. The lower limit of the number of carbon atoms of the alkyl group of the alkylamine is 1. Tetraethylenepentamine (linear type) is excluded from the polyethyleneimine having an average condensation number of ethyleneimino groups of 4, and examples of the polyethyleneimine having an average condensation number of ethyleneimino groups of 4 include branched type polyethyleneimine.

The alkanolamine as the component (B) is an alkanolamine having 1 or more and 10 or less carbon atoms and having 1 or more and 3 or less alkanol groups.

The alkylalkanolamine as the component (B) is an alkylalkanolamine having 2 or more and 10 or less carbon atoms and having 1 or 2 alkyl groups.

In consideration of the odor of the liquid dispersant composition for gypsum, the component (B) is preferably one or more kinds of a nitrogen-containing compound selected from the alkylamine, the alkanolamine, the alkylalkanolamine, ethylenediamine, diethylenetriamine, triethylenetetramine, tetraethylenepentamine, and a polyethyleneimine (preferably having an average condensation number of ethyleneimino groups of 4 or more, and more preferably 5 or more).

The component (B) is a favorable compound from the standpoint that the compound has good solubility in water and is easily mixed with the copolymer and water, and the standpoint of the flowability of the gypsum slurry.

The alkanolamine has 1 or more and 10 or less carbon atoms from the standpoint of the flowability of the gypsum slurry, and has 1 or more and 3 or less alkanol groups from the standpoint of the flowability of the gypsum slurry. Specific examples thereof include a monoalkanolamine, a dialkanolamine, and a trialkanolamine. The alkanolamine is preferably an alkanolamine selected from monoethanolamine, diethanolamine, triethanolamine, and triisopropanolamine.

The alkylalkanolamine has 2 or more and 10 or less carbon atoms from the standpoint of the flowability of the gypsum slurry, and has 1 or 2 alkyl groups from the standpoint of the flowability of the gypsum slurry. Specific examples thereof include an N-monoalkylmonoalkanolamine, an N-monoalkyldialkanolamine, and an N,N-dialkylmonoalkanolamine. The alkylalkanolamine is preferably N-methyldiethanolamine. The alkyl group preferably has 1 or more and 4 or less carbon atoms.

Among ethylenediamine, diethylenetriamine, triethylenetetramine, and tetraethylenepentamine, ethylenediamine and diethylenetriamine are preferred from the standpoint of the flowability of the gypsum slurry.

Examples of the polyethyleneimine include a polyethyleneimine selected from a linear type polyethyleneimine and a branched type polyethyleneimine. The polyethyleneimine preferably has a molecular weight of 200 or more and 100,000 or less from the standpoint of the flowability of the gypsum slurry. The polyethyleneimine is preferably a branched type polyethyleneimine, and more preferably a branched type polyethyleneimine having a molecular weight of 200 or more and 10,000 or less, from the standpoint of the flowability of the gypsum slurry.

In the alkylamine, the primary amine having an alkyl group having 5 or less in total carbon atoms is preferably an alkylamine selected from methylamine, ethylamine, propylamine, butylamine, and pentylamine from the standpoint of the flowability of the gypsum slurry.

In the alkylamine, the secondary amine having alkyl groups having 6 or less in total carbon atoms may have two alkyl groups each having any number of carbon atoms, as far as the total number of carbon atoms of the alkyl groups is 6 or less. Examples of the secondary amine having alkyl groups having 6 or less in total carbon atoms include dimethylamine, diethylamine, and dipropylamine, and dimethylamine, diethylamine, and dipropylamine are preferred, from the standpoint of the flowability of the gypsum slurry.

In the alkylamine, the tertiary amine having alkyl groups having 5 or less in total carbon atoms may have three alkyl groups each having any number of carbon atoms, as far as the total number of carbon atoms of the alkyl groups is 5 or less. Examples of the tertiary amine having alkyl groups having 5 or less in total carbon atoms include trimethylamine, dimethylethylamine, and diethylmethylamine, and trimethylamine is preferred from the standpoint of the flowability of the gypsum slurry.

The component (B) is preferably one or more kinds selected from monoethanolamine, diethanolamine, triethanolamine, N-methyldiethanolamine, triisopropanolamine, ethylenediamine, and diethylenetriamine from the standpoint of the storage stability of the dispersant composition, and is more preferably one or more kinds of a compound selected from diethanolamine and triethanolamine, and further preferably triethanolamine, from the standpoint of the handleability and the availability. Monoethanolamine and diethylenetriamine are preferred from the standpoint of the hydrolysis rate of the dispersant composition.

The liquid dispersant composition for gypsum of the present invention preferably contains the component (A) in an amount of 5% by mass or more, and more preferably 10% by mass or more, and preferably in an amount of 60% by mass or less, and more preferably 50% by mass or less, from the standpoint of the easiness of the use of the product and the decrease of the viscosity of the product.

The liquid dispersant composition for gypsum of the present invention preferably contains the component (B)

in an amount of 0.0015% by mass or more, more preferably 0.05% by mass or more, further preferably 0.1% by mass or more, and furthermore preferably 0.5% by mass or more, and in an amount of 50% by mass or less, more preferably 35% by mass or less, and further preferably 20% by mass or less, from the standpoint of the enhancement of the flowability and the control of pH.

In the liquid dispersant composition for gypsum of the present invention, the mass ratio of the component (A) and the component (B), (A)/(B), is 0.2 or more, more preferably 0.5 or more, and further preferably 1 or more, from the standpoint of the flowability of the gypsum slurry. The mass ratio (A) / (B) is 25 or less, preferably 15 or less, furthermore preferably 10 or less, and furthermore preferably 5 or less.

The dispersant composition of the present invention is favorable for gypsum containing phosphoric acid. Examples of the gypsum containing phosphoric acid used in the present invention include such a one that a gypsum slurry containing 250 g of the gypsum dispersed in 142.5 g of water at 20°C has pH of 5.0 or more and 6.0 or less at 20°C. The pH of the gypsum slurry is the pH of the aqueous solution part of the gypsum slurry.

The liquid dispersant composition for gypsum of the present invention is a liquid composition containing water. Water is used in such an amount that is the balance of the composition. The liquid dispersant composition for gypsum of the present invention has pH of 7.0 or more at 20°C from the standpoint of the enhancement of the stability. The pH thereof at 20°C is 13.0 or less, preferably 12.0 or less, and more preferably 11.0 or less.

Gypsum Slurry

The gypsum slurry of the present invention is a gypsum-water slurry containing gypsum and water. The use of the component (A) and the component (B) in the gypsum slurry makes the water reducing effect and the flowability excellent.

The gypsum used may be any type of gypsum, for example, neutralized gypsum with high quality, natural gypsum containing various impurities, phosphogypsum as a by-product of phosphoric acid, and fuel gas desulfurization gypsum formed in thermal electric power generation. The gypsum containing phosphoric acid described above is preferably used from the standpoint that the flowability may be controlled by adjusting the pH. It has been known that gypsum containing phosphoric acid exhibits water reducing effect with a polycarboxylic acid dispersant, but is lowered in flowability therewith. In the present invention, the use of the component (A) and the component (B) provides a gypsum slurry that exhibits water reducing effect and is excellent in flowability even in the case where gypsum containing phosphoric acid is used, and thus a considerably useful technique in this field of art is provided.

In the gypsum slurry of the present invention, the water-gypsum ratio in terms of water/gypsum mass ratio is preferably 0.4 or more, and more preferably 0.5 or more, from the standpoint of the enhancement of the flowability of the gypsum slurry. The water/gypsum mass ratio is preferably 0.9 or less, and more fpreferably 0.8 or less.

In the gypsum slurry of the present invention, the content of the component (A) is 0.005 parts by mass or more, preferably 0.01 parts by mass or more, and more preferably 0.03 parts by mass or more, and is 1.0 part by mass or less, preferably 0.6 parts by mass or less, more preferably 0.2 parts by mass or less, and further preferably 0.1 parts by mass or less, all per 100 parts by mass of the gypsum, from the standpoint of the enhancement of the flowability of the gypsum slurry.

In the gypsum slurry of the present invention, the content of the component (B) is preferably 0.0003 parts by mass or more, more preferably 0.001 parts by mass or more, further preferably 0.005 parts by mass or more, and furthermore preferably 0.025 parts by mass or more, per 100 parts by mass of the gypsum, from the standpoint of the flowability of the gypsum slurry. In the gypsum slurry of the present invention, the content of the component (B) is preferably 0.2 parts by mass or less, more preferably 0.1 parts by mass or less, and further preferably 0.06 or less.

In the gypsum slurry of the present invention, the mass ratio of the component (A) and the component (B), (A)/(B), is preferably 0.2 or more, more preferably 0.5 or more, further preferably 1 or more, and furthermore preferably 2 or more, from the standpoint of the flowability of the gypsum slurry. The mass ratio (A) / (B) is preferably 3,000 or less, more preferably 500 or less, further preferably 100 or less, furthermore preferably 50 or less, furthermore preferably 25 or less, furthermore preferably 15 or less, furthermore preferably 10 or less, and furthermore preferably 5 or less.

In the gypsum slurry of the present invention, the pH at 20°C is preferably 6.0 or more, and more preferably 6.2 or more, from the standpoint of the flowability. The pH is preferably 9.0 or less, and more preferably 8.0 or less, from the standpoint of the prevention of the hardening retardation, and the adhesion to paper on molding a gypsum board. The pH of the gypsum slurry is the pH of the aqueous solution part of the gypsum slurry.

The gypsum slurry of the present invention may be produced by mixing gypsum, water, the component (A), and the component (B). The component (A) and the component (B) are preferably used after mixing with water in advance. The component (A) and the component (B) may be used after mixing with so-called mixing water. In the preparation of the gypsum slurry of the present invention, the liquid dispersant composition for gypsum of the present invention may be used. In this case, the liquid dispersant composition for gypsum of the present invention may be used as it is or after diluting with water.

The gypsum slurry of the present invention may be favorably used for producing a gypsum board.

According to the present invention, use of a composition containing the component (A) and the component (B), as a dispersant for gypsum for enhancing flowability of a gypsum slurry is provided.

According to the present invention, a method for producing a liquid dispersant composition for gypsum having pH of 7.0 or more and 13.0 or less at 20°C, containing mixing the component (A), the component (B), and water is provided.

According to the present invention, a method for producing a gypsum slurry, containing mixing gypsum, water, the component (A), and the component (B) is provided.

According to the present invention, a method for producing a gypsum slurry having pH of 6.0 or more and 9.0 or less at 20°C, containing the following steps is provided:

step 1: a step of mixing a component (A), a component (B), and water to provide a liquid composition for preparing gypsum; and
step 2: a step of mixing the liquid composition for preparing gypsum obtained in the step 1 and gypsum to provide a gypsum slurry.

In the use and the production method described above,
the component (A) is a copolymer obtained through polymerization of a monomer containing a monomer (A1) represented by the general formula (A1) and a monomer (A2) represented by the general formula (A2), and the component (B) is a nitrogen-containing compound,
in the component (A), the ratio of the mass of the monomer (A2) with respect to the total mass of the monomer (A1) and the monomer (A2) is 4% by mass or more,
the component (B) is one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) is an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) is an alkanolamine having 1 or more and 10 or less carbon atoms and having 1 or more and 3 or less alkanol groups, and
the alkylalkanolamine as the component (B) is an alkylalkanolamine having 2 or more and 10 or less carbon atoms and having 1 or 2 alkyl groups.

The preferred embodiments described for the liquid dispersant composition for gypsum and the gypsum slurry may be appropriately applied to the use and the production method.

The contents of the component (A) and the component (B) described for the gypsum slurry may be appropriately applied to the production method after converting to the mixing amounts or the addition amounts.

Embodiments of the present invention will be described below.

The preferred embodiments described for the liquid dispersant composition for gypsum and the gypsum slurry may be appropriately applied to the use and the production method described in the following embodiments.

The preferred embodiments of the component (A) and the component (B) described for the liquid dispersant composition for gypsum may be appropriately applied to the use and the production method described in the following embodiments.

The contents of the component (A) and the component (B) described for the gypsum slurry may be appropriately applied to the production method in the following embodiments after converting to the mixing amounts or the addition amounts.

<1>

A gypsum slurry containing gypsum, (A) a copolymer obtained through polymerization of a monomer containing a monomer (A1) represented by the following general formula (A1) and a monomer (A2) represented by the following general formula (A2) (which is hereinafter referred to as a component (A)), (B) a nitrogen-containing compound (which is hereinafter referred to as a component (B)), and water,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having

1 or more and 3 or less alkanol groups,
the alkylalkanolamine as the component (B) being an alkylalkanolamine having 2 or more and 10 or less carbon atoms and having 1 or 2 alkyl groups,
a content of the component (A) being 0.005 parts by mass or more and 1.0 part by mass or less per 100 parts by mas of gypsum, a mass ratio of the component (A) and the component (B), (A)/(B), being 0.2 or more and 25 or less, and the gypsum slurry having pH of 6.0 or more and 9 . 0 or less at 20°C:

[Formula 13]

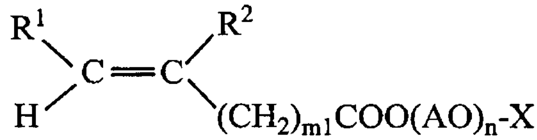

(A1)

wherein

$R^1$ and $R^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 14]

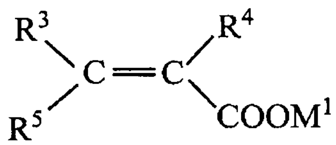

(A2)

wherein

$R^3$, $R^4$ and $R^5$ each independently represent a hydrogen atom, a methyl group, or $(CH_2)_{m2}COOM^2$ ;
$M^1$ and $M^2$ each independently represent a hydrogen atom or an alkali metal; and
m2 represents an integer of 0 or more and 2 or less.

<2> The gypsum slurry according to the item <1>, wherein in the general formula (A1) of the component (A), n represents an average addition molar number of AO, which is preferably 6 or more, more preferably 9 or more, further preferably 20 or more, furthermore preferably 23 or more, furthermore preferably 80 or more, furthermore preferably 100 or more, and furthermore preferably 110 or more, and is preferably 200 or less, more preferably 150 or less, and further preferably 130 or less.

<3> The gypsum slurry according to the item <1> or <2>, wherein the ratio of the mass of the monomer (A2) with respect to the total mass of the monomer (A1) and the monomer (A2) of the component (A) is 4% by mass or more, preferably 5% by mass or more, more preferably 7% by mass or more, and further preferably 10% by mass or more, and is preferably less than 100% by mass, more preferably 50% by mass or less, further preferably 25% by mass or less, and furthermore preferably 20% by mass or less.

<4> The gypsum slurry according to any one of the items <1> to <3>, wherein the component (A) has a weight average molecular weight of 10,000 or more, more preferably 20,000 or more, and further preferably 50,000 or more, and of preferably 200,000 or less, and more preferably 100,000 or less.

<5> The gypsum slurry according to any one of the items <1> to <4>, wherein the gypsum is gypsum that contains phosphoric acid.

<6> The gypsum slurry according to any one of the items <1> to <4>, wherein the content of the component (A) is preferably 0.005 parts by mass or more, more preferably 0.01 parts by mass or more, and further preferably 0.03 parts by mass or more, and is preferably 1. 0 part by mass or less, more preferably 0.6 parts by mass or less, further

preferably 0.2 parts by mass or less, and furthermore preferably 0.1 parts by mass or less, all per 100 parts by mass of the gypsum.

<7> The gypsum slurry according to any one of the items <1> to <6>, wherein the content of the component (B) is preferably 0.0003 parts by mass or more, more preferably 0.001 parts by mass or more, further preferably 0.005 parts by mass or more, and furthermore preferably 0.025 parts by mass or more, and is preferably 0.2 parts by mass or less, more preferably 0.1 parts by mass or less, and further preferably 0.06 parts by mass or less, all per 100 parts by mass of the gypsum.

<8> The gypsum slurry according to any one of the items <1> to <7>, wherein the component (B) is preferably one or more kinds of a compound selected from diethanolamine and triethanolamine, and more preferably triethanolamine.

<9> The gypsum slurry according to any one of the items <1> to <8>, wherein the mass ratio of the component (A) and the component (B), (A)/(B), is 0.5 or more, preferably 1 or more, and furthermore preferably 2 or more, and is 15 or less, preferably 10 or less, and furthermore preferably 5 or less.

<10> A method for producing a gypsum slurry having pH of 6.0 or more and 9.0 or less at 20°C, containing the following steps:

step 1: a step of mixing a component (A), a component (B), and water to provide a liquid composition for preparing gypsum, wherein the component (A) and the component (B) are mixed in a mass ratio, (A)/(B), of 0.2 or more and 25 or less; and
step 2: a step of mixing the liquid composition for preparing gypsum obtained in the step 1 and gypsum to provide a gypsum slurry,

the component (A) being a copolymer obtained through polymerization of a monomer containing a monomer (A1) represented by the following general formula (A1) and a monomer (A2) represented by the following general formula (A2), and the component (B) being a nitrogen-containing compound,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups, and
the alkylalkanolamine as the component (B) being an alkylalkanolamine having 2 or more and 10 or less carbon atoms and having 1 or 2 alkyl groups:

[Formula 15]

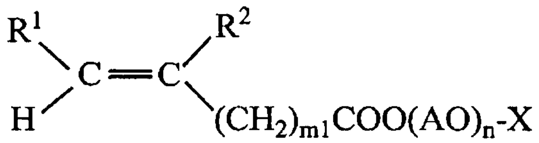

(A1)

wherein

$R^1$ and $R^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 16]

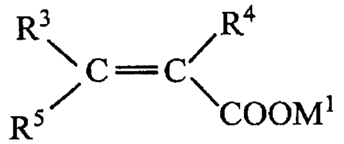

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom or an alkali metal; and
m2 represents an integer of 0 or more and 2 or less.

<11> The method for producing a gypsum slurry according to the item <10>, wherein in the general formula (A1) of the component (A), n represents an average addition molar number of AO, which is preferably 6 or more, more preferably 9 or more, further preferably 20 or more, furthermore preferably 23 or more, furthermore preferably 80 or more, furthermore preferably 100 or more, and furthermore preferably 110 or more, and is preferably 200 or less, more preferably 150 or less, and further preferably 130 or less.

<12> The method for producing a gypsum slurry according to the item <10> or <11>, wherein the ratio of the mass of the monomer (A2) with respect to the total mass of the monomer (A1) and the monomer (A2) of the component (A) is 4% by mass or more, preferably 5% by mass or more, more preferably 7% by mass or more, and further preferably 10% by mass or more, and is preferably less than 100% by mass, more preferably 50% by mass or less, further preferably 25% by mass or less, and furthermore preferably 20% by mass or less.

<13> The method for producing a gypsum slurry according to any one of the items <10> to <12>, wherein the component (A) has a weight average molecular weight of 10,000 or more, more preferably 20, 000 or more, and further preferably 50, 000 or more, and of preferably 200,000 or less, and more preferably 100,000 or less.

<14> The method for producing a gypsum slurry according to any one of the items <10> to <13>, wherein the component (A) is mixed in an amount of preferably 0.005 parts by mass or more, more preferably 0.01 parts by mass or more, and further preferably 0.03 parts by mass or more, and of preferably 1.0 part by mass or less, more preferably 0.6 parts by mass or less, further preferably 0.2 parts by mass or less, and furthermore preferably 0.1 parts by mass or less, all per 100 parts by mass of the gypsum.

<15> The method for producing a gypsum slurry according to any one of the items <10> to <14>, wherein the component (B) is mixed in an amount of preferably 0.0003 parts by mass or more, more preferably 0.001 parts by mass or more, further preferably 0.005 parts by mass or more, and furthermore preferably 0.025 parts by mass or more, and of preferably 0.2 parts by mass or less, more preferably 0.1 parts by mass or less, and further preferably 0.06 parts by mass or less, all per 100 parts by mass of the gypsum.

<16> The method for producing a gypsum slurry according to any one of the items <10> to <15>, wherein the component (B) is preferably one or more kinds of a compound selected from diethanolamine and triethanolamine, and more preferably triethanolamine.

<17> The method for producing a gypsum slurry according to any one of the items <10> to <16>, wherein the component (A) and the component (B) are mixed in a mass ratio, (A)/(B), of preferably 0.2 or more, more preferably 0.5 or more, further preferably 1 or more, and furthermore preferably 2 or more, and of preferably 3,000 or less, more preferably 500 or less, further preferably 100 or less, furthermore preferably 50 or less, furthermore preferably 25 or less, furthermore preferably 15 or less, still further preferably 10 or less, and furthermore preferably 5 or less.

<18> The method for producing a gypsum slurry according to any one of the items <10> to <17>, wherein the gypsum is gypsum that contains phosphoric acid.

<19> The method for producing gypsum slurry according to any one of the items <10> to <18>, wherein the gypsum slurry has a water-gypsum ratio in terms of water/gypsum mass ratio of preferably 0.4 or more, and more preferably 0.5 or more, and of preferably 0.9 or less, and more preferably 0.8 or less, and water is used for mixing to make the mass ratio.

<20> The method for producing a gypsum slurry according to any one of the items <10> to <19>, wherein the method is a method for producing a gypsum slurry that is excellent in flowability.

<21> Use of a composition containing a component (A), a component (B) and water, as a dispersant for gypsum for enhancing flowability of a gypsum slurry,

The pH of the composition being 7.0 or more and 13.0 or less at 20°C,

a content of the component (A) being 5% by mass or more and 60% by mass or less in the composition,
a mass ratio of the component (A) and the component (B), (A)/(B), being 0.2 or more and 25 or less in the composition,
the component (A) being a copolymer obtained through polymerization of a monomer containing a monomer (A1) represented by the following general formula (A1) and a monomer (A2) represented by the following general formula (A2), and the component (B) being a nitrogen-containing compound,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups, and
the alkylalkanolamine as the component (B) being an alkylalkanolamine having 2 or more and 10 or less carbon atoms and having 1 or 2 alkyl groups:

[Formula 17]

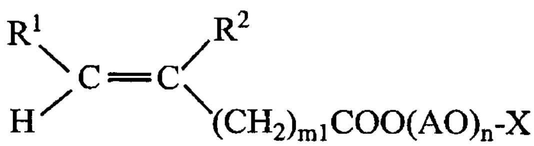

(A1)

wherein

R$^1$ and R$^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 18]

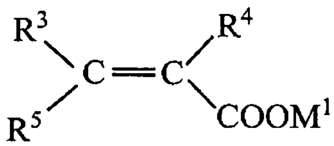

(A2)

wherein

R$^3$, R$^4$ and R$^5$ each independently represent a hydrogen atom, a methyl group, or $(CH_2)_{m2}COOM^2$;
M$^1$ and M$^2$ each independently represent a hydrogen atom or an alkali metal; and
m2 represents an integer of 0 or more and 2 or less.

<22> The use as a dispersant for gypsum according to the item <21>, wherein in the general formula (A1) of the component (A), n represents an average addition molar number of AO, which is preferably 6 or more, more preferably 9 or more, further preferably 20 or more, furthermore preferably 23 or more, furthermore preferably 80 or more, furthermore preferably 100 or more, and furthermore preferably 110 or more, and is preferably 200 or less, more preferably 150 or less, and further preferably 130 or less.
<23> The use as a dispersant for gypsum according to the item <21> or <22>, wherein the ratio of the mass of the monomer (A2) with respect to the total mass of the monomer (A1) and the monomer (A2) of the component (A) is 4% by mass or more, preferably 5% by mass or more, more preferably 7% by mass or more, and further preferably

10% by mass or more, and is preferably less than 100% by mass, more preferably 50% by mass or less, further preferably 25% by mass or less, and furthermore preferably 20% by mass or less.

<24> The use as a dispersant for gypsum according to any one of the items <21> to <23>, wherein the component (A) has a weight average molecular weight of 10,000 or more, more preferably 20,000 or more, and further preferably 50,000 or more, and of preferably 200,000 or less, and more preferably 100,000 or less.

<25> The use as a dispersant for gypsum according to any one of the items <21> to <24>, wherein the amount of the component (A) used is preferably 0.005 parts by mass or more, more preferably 0.01 parts by mass or more, and further preferably 0.03 parts by mass or more, and is preferably 1.0 part by mass or less, more preferably 0.6 parts by mass or less, further preferably 0.2 parts by mass or less, and furthermore preferably 0.1 parts by mass or less, all per 100 parts by mass of the gypsum.

<26> The use as a dispersant for gypsum according to any one of the items <21> to <25>, wherein the amount of the component (B) used is preferably 0.0003 parts by mass or more, more preferably 0.001 parts by mass or more, further preferably 0.005 parts by mass or more, and furthermore preferably 0.025 parts by mass or more, and is preferably 0.2 parts by mass or less, more preferably 0.1 parts by mass or less, and further preferably 0.06 parts by mass or less, all per 100 parts by mass of the gypsum.

<27> The use as a dispersant for gypsum according to any one of the items <21> to <26>, wherein the component (B) is preferably one or more kinds of a compound selected from diethanolamine and triethanolamine, and more preferably triethanolamine.

<28> The use as a dispersant for gypsum according to any one of the items <21> to <27>, wherein the mass ratio of the component (A) and the component (B), (A) / (B), is 0.5 or more, preferably 1 or more, and furthermore preferably 2 or more, and is 15 or less, preferably 10 or less, and furthermore preferably 5 or less.

<29> A method for producing a liquid dispersant composition for gypsum, containing mixing (A) a copolymer obtained through polymerization of a monomer containing a monomer (A1) represented by the following general formula (A1) and a monomer (A2) represented by the following general formula (A2) (which is hereinafter referred to as a component (A)), (B) a nitrogen-containing compound (which is hereinafter referred to as a component (B)), and water,
the component (A) being mixed in an amount of 5% by mass or more and 60% by mass or less based on the total mixed materials,
the component (A) and the component (B) being mixed in a mass ratio, (A)/(B), of 0.2 or more and 25 or less,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups,
the alkylalkanolamine as the component (B) being an alkylalkanolamine having 2 or more and 10 or less carbon atoms and having 1 or 2 alkyl groups, and
the liquid dispersant composition for gypsum having pH of 7.0 or more and 13.0 or less at 20°C:

[Formula 19]

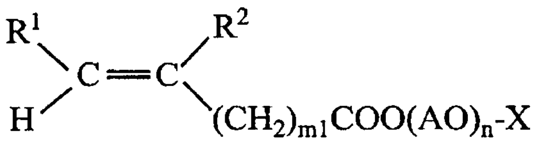

(A1)

wherein

$R^1$ and $R^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 20]

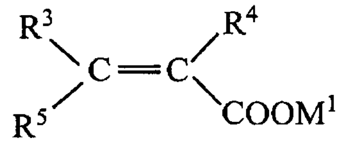

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom or an alkali metal ; and
m2 represents an integer of 0 or more and 2 or less.

<30> The method for producing a liquid dispersant composition for gypsum according to the item <29>, wherein in the general formula (A1) of the component (A), n represents an average addition molar number of AO, which is preferably 6 or more, more preferably 9 or more, further preferably 20 or more, furthermore preferably 23 or more, furthermore preferably 80 or more, furthermore preferably 100 or more, and furthermore preferably 110 or more, and is preferably 200 or less, more preferably 150 or less, and further preferably 130 or less.
<31> The method for producing a liquid dispersant composition for gypsum according to the item <29> or <30>, wherein the ratio of the mass of the monomer (A2) with respect to the total mass of the monomer (A1) and the monomer (A2) of the component (A) is 4% by mass or more, preferably 5% by mass or more, more preferably 7% by mass or more, and further preferably 10% by mass or more, and is preferably less than 100% by mass, more preferably 50% by mass or less, further preferably 25% by mass or less, and furthermore preferably 20% by mass or less.
<32> The method for producing a liquid dispersant composition for gypsum according to any one of the items <29> to <31>, wherein the component (A) has a weight average molecular weight of 10,000 or more, more preferably 20,000 or more, and further preferably 50,000 or more, and of preferably 200,000 or less, and more preferably 100,000 or less.
<33> The method for producing a liquid dispersant composition for gypsum according to any one of the items <29> to <32>, wherein the liquid dispersant composition for gypsum is for gypsum that contains phosphoric acid.
<34> The method for producing a liquid dispersant composition for gypsum according to any one of the items <29> to <33>, wherein the component (A) is mixed in an amount of preferably 5% by mass or more, and more preferably 10% by mass or more, and of preferably 60% by mass or less, and more preferably 50% by mass or less, based on the total mixed materials.
<35> The method for producing a liquid dispersant composition for gypsum according to any one of the items <29> to <34>, wherein the component (B) is preferably one or more kinds of a compound selected from diethanolamine and triethanolamine, and more preferably triethanolamine.
<36> The method for producing a liquid dispersant composition for gypsum according to any one of the items <29> to <35>, wherein the component (A) and the component (B) are mixed in a mass ratio, (A)/(B), of preferably 0.5 or more, preferably 1 or more, and furthermore preferably 2 or more, and of 15 or less, preferably 10 or less, and furthermore preferably 5 or less.

Example

The following examples describe embodiments of the present invention. The examples describe working examples of the present invention, and are not for limiting the present invention.

Production of Polycarboxylic Acid Copolymer

In Production Examples below, the following monomers were used as the monomer (A1). EO is an abbreviation of ethylene oxide.

Monomer (A1-1): methanol EO/methacrylate (average EO addition molar number: 120) (which is a monomer represented by the general formula (A1), wherein $R^1$ represents a hydrogen atom, $R^2$ represents a methyl group, m1 represents 0, AO represents an alkyleneoxy group having 2 carbon atoms (ethyleneoxy group), n represents 120,

and X represents a methyl group)

Monomer (A1-2) : methanol EO/methacrylate (average EO addition molar number: 23) (which is a monomer represented by the general formula (A1), wherein $R^1$ represents a hydrogen atom, $R^2$ represents a methyl group, m1 represents 0, AO represents an alkyleneoxy group having 2 carbon atoms (ethyleneoxy group), n represents 23, and X represents a methyl group)

Monomer (A1-3) : methanol EO/methacrylate (average EO addition molar number: 9) (which is a monomer represented by the general formula (A1), wherein $R^1$ represents a hydrogen atom, $R^2$ represents a methyl group, m1 represents 0, AO represents an alkyleneoxy group having 2 carbon atoms (ethyleneoxy group), n represents 9, and X represents a methyl group)

The monomers were produced or obtained in the following manners.

Monomer (A1-1): 1,000 parts by mass of polyethylene glycol monomethyl ether having an ethylene oxide addition molar number of 120 (weight average molecular weight: 5,344) melted at 80°C was charged in a glass reactor equipped with a thermometer, a stirrer, a dropping funnel, a nitrogen introducing tube and a refrigeration condenser. Subsequently, 3 parts by mass of hydroquinone and 32 parts by mass of p-toluenesulfonic acid were charged therein. 483 parts by mass of methacrylic acid (which was 30 times by mol the amount of polyethylene glycol monomethyl ether) was charged therein while introducing air into the reaction liquid at a flow rate of 6 mL/min, and introducing nitrogen into the gas phase part of the reactor at a flow rate of 12 mL/min, all per 1 kg of the total mass of polyethylene glycol monomethyl ether and methacrylic acid, followed by heating and depressurizing the interior of the reactor. Under the pressure controlled to 26.7 kPa, the time when the temperature of the reaction liquid reached 105°C was designated as the reaction starting time, and the reaction was performed by maintaining the temperature of the reaction liquid to 110°C by continuously heating while distilling off reaction water and methacrylic acid. The pressure was reduced to 12 to 13.3 kPa after 1 hour from the start of the reaction, and then maintained. After 6 hours from the start of the reaction, the pressure was returned to ordinary pressure, and the reaction was terminated by neutralizing with a 48% sodium hydroxide aqueous solution added in an amount of 1.05 times equivalent of p-toluenesulfonic acid. Thereafter, while maintaining the temperature of the reaction liquid to 130°C, unreacted methacrylic acid was recovered by a vacuum distillation method, and an esterification reaction product was obtained. After cooling to 100°C, 200 parts by mass of a saturated sodium chloride aqueous solution and 1,000 parts by mass of toluene were added to the reaction product, and the mixture was controlled to 50°C. The withdrawal of the under layer thus separated, the addition of 200 parts by mass of a saturated sodium chloride aqueous solution, and the separation of layers were repeated 5 times, and then toluene was distilled off to provide methoxy polyethylene glycol methacrylate (average EO addition molar number: 120) as the purified monomer (A1-1).

Monomer (A1-2) : Methoxy polyethylene glycol methacrylate (average EO addition molar number: 23), M-230G, produced by Shin-Nakamura Chemical Co., Ltd., was used.

Monomer (A1-3) : Methoxy polyethylene glycol methacrylate (average EO addition molar number: 9), M-90G, produced by Shin-Nakamura Chemical Co., Ltd., was used.

(1) Production Example 1

292 g (16.2 mol) of water was charged in a reactor equipped with a stirrer, and the interior thereof was substituted with nitrogen under stirring, followed by heating to 75°C in a nitrogen atmosphere. A mixture obtained by mixing and dissolving 339 g (0.063 mol) of the monomer (A1-1) and 102 g (1.19 mol) of methacrylic acid (mass ratio: 76.9/23.1, molar ratio: 5/95) with 252 g (14.0 mol) of water, 71.5 g of a 10% by mass ammonium persulfate aqueous solution, and 10.28 g of 2-mercaptoethanol each were simultaneously added dropwise to the reaction system over 2 hours. Subsequently, 57.2 g of a 10% by mass ammonium persulfate aqueous solution was added dropwise thereto over 30 minutes, followed by ripening for 1 hour at the same temperature (75°C) . After completing the ripening, 103.3 g of a 48% by mass NaOH aqueous solution was added for neutralization to provide a copolymer A1 having a weight average molecular weight of 25,000.

(2) Production Example 2

317 g (17.6 mol) of water was charged in a reactor equipped with a stirrer, and the interior thereof was substituted with nitrogen under stirring, followed by heating to 75°C in a nitrogen atmosphere. A mixture obtained by mixing and dissolving 323 g (0.06 mol) of the monomer (A1-1) and 46.5 g (0.54 mol) of methacrylic acid (mass ratio: 87.4/12.6, molar ratio: 10/90) with 239 g (13.3 mol) of water, 41.7 g of a 10% by mass ammonium persulfate aqueous solution, and 1.9 g of 2-mercaptoethanol each were simultaneously added dropwise to the reaction system over 2 hours. Subsequently, 13.9 g of a 10% by mass ammonium persulfate aqueous solution was added dropwise thereto over 30 minutes,

followed by ripening for 1 hour at the same temperature (75°C). After completing the ripening, 49.3 g of a 48% by mass NaOH aqueous solution was added for neutralization to provide a copolymer A2 having a weight average molecular weight of 63,000.

(3) Production Example 3

282 g (15.7 mol) of water was charged in a reactor equipped with a stirrer, and the interior thereof was substituted with nitrogen under stirring, followed by heating to 75°C in a nitrogen atmosphere. A mixture obtained by mixing and dissolving 323 g (0.06 mol) of the monomer (A1-1) and 20.7 g (0.24 mol) of methacrylic acid (mass ratio: 94/6, molar ratio: 20/80) with 239 g (13.3 mol) of water, 34.7 g of a 10% by mass ammonium persulfate aqueous solution, and 1.8 g of 2-mercaptoethanol each were simultaneously added dropwise to the reaction system over 2 hours. Subsequently, 13.9 g of a 10% by mass ammonium persulfate aqueous solution was added dropwise thereto over 30 minutes, followed by ripening for 1 hour at the same temperature (75°C). After completing the ripening, 23.9 g of a 48% by mass NaOH aqueous solution was added for neutralization to provide a copolymer A3 having a weight average molecular weight of 78,000.

(4) Production Example 4

275 g (15.3 mol) of water was charged in a reactor equipped with a stirrer, and the interior thereof was substituted with nitrogen under stirring, followed by heating to 75°C in a nitrogen atmosphere. A mixture obtained by mixing and dissolving 323 g (0.06mol) of the monomer (A1-1) and 9.5 g (0.11 mol) of methacrylic acid (mass ratio: 97.1/2.9, molar ratio: 35/65) with 239 g (13.3 mol) of water, 23.8 g of a 10% by mass ammonium persulfate aqueous solution, and 1.2 g of 2-mercaptoethanol each were simultaneously added dropwise to the reaction system over 2 hours. Subsequently, 11.9 g of a 10% by mass ammonium persulfate aqueous solution was added dropwise thereto over 30 minutes, followed by ripening for 1 hour at the same temperature (75°C) . After completing the ripening, 13.1 g of a 48% by mass NaOH aqueous solution was added for neutralization to provide a copolymer A4 having a weight average molecular weight of 87,000.

(5) Production Example 5

1,102 g (61.2 mol) of water was charged in a reactor equipped with a stirrer, and heated to 78°C in a nitrogen atmosphere. A mixture obtained by mixing and dissolving 0.063 mol of the monomer (A1-1), 0.36 mol of the monomer (A1-3), and 1.16 mol of methacrylic acid with 15.5 mol of water, 36.16 g of a 10% by mass ammonium persulfate aqueous solution, and 4.0 g of 2-mercaptoethanol each were simultaneously added dropwise to the reaction system over 65 minutes, then a mixture obtained by mixing 0.023 mol of the monomer (A1-1), 0.15 mol of the monomer (A1-3), and 0.30 mol of methacrylic acid with 5.69 mol of water, 10.74 g of a 10% by mass ammonium persulfate aqueous solution, and 1.2 g of 2-mercaptoethanol were added dropwise thereto over 30 minutes, and then a mixture obtained by mixing 0.017 mol of the monomer (A1-1), 0.12 mol of the monomer (A1-3), and 0.17 mol of methacrylic acid with 54.29 mol of water, 7.08 g of a 10% by mass ammonium persulfate aqueous solution, and 0.79 g of 2-mercaptoethanol were added dropwise thereto over 15 minutes. After completing the dropwise addition, the reaction system was ripened at 78°C for 60 minutes, and 141.0 g of a 48% by mass NaOH aqueous solution was added for neutralization to provide a copolymer A5 having a weight average molecular weight of 75,000. Eventually, 554 g (0.103 mol) of the monomer (A1-1), 312 g (0.63 mol) of the monomer (A1-3), and 140 g (1.63 mol) of methacrylic acid were copolymerized, and the ratio of methacrylic acid was 13.9% by mass (69% by mol).

(6) Production Example 6

20.4 mol of water was charged in a reactor equipped with a stirrer, and the interior thereof was substituted with nitrogen under stirring, followed by heating to 80°C in a nitrogen atmosphere. A mixture obtained by mixing and dissolving 300 g (0.27 mol) of the monomer (A1-2) and 62.9 g (0.73 mol) of methacrylic acid (mass ratio: 82.7/17.3, molar ratio: 27/73) with 173 g (9.6 mol) of water, 34.1 g of a 10% by mass ammonium persulfate aqueous solution, and 2.9 g of 2-mercaptoethanol each were simultaneously added dropwise to the reaction system over 2 hours. Subsequently, 11.4 g of a 10% by mass ammonium persulfate aqueous solution was added dropwise thereto over 30 minutes, followed by ripening for 1 hour at the same temperature (75°C). After completing the ripening, 60.7 g of a 48% by mass NaOH aqueous solution was added for neutralization to provide a copolymer A6 having a weight average molecular weight of 50,000.

Test Example 1

The component (A) and the component (B) shown in Table 1 were mixed with water to prepare 142.5 g of mixing water. The component (A) and the component (B) were used in 142.5 g of the mixing water by controlling the amounts thereof mixed, so as to make the amounts thereof added per 100 parts by mass of gypsum as shown in Table 1. 142.5 g of the mixing water was added to 250 g of SAKURA-brand calcined gypsum, grade A (produced by Yoshino Gypsum Co., Ltd.), to which phosphoric acid had been added in an amount shown in Table 1, and the mixture was kneaded at 20°C with a hand mixer (Model MK-H3, produced by Panasonic Corporation) for 10 minutes to provide a gypsum slurry. The resulting gypsum slurry was filled in a cone having an upper inner diameter of 50 mm, a bottom inner diameter of 50 mm and a height of 50 mm, and the flow (mm) after withdrawal was measured. The results are shown in Table 1. In the table, a copolymer that does not correspond to the component (A) and a compound that does not correspond to the component (B) are also shown in the columns therefor for convenience. In this test example, the gypsum slurry contains 142.5 g of the mixing water (W) and 250 g of the gypsum (G), which provides a W/G mass ratio of 0.57.

[Table 1]

| | | Amount of phosphoric acid added to gypsum (mg) | Component (A) | | | | | | Component (B) | | (A) / (B) (mass ratio) | Gypsum slurry | | Classification |
|---|---|---|---|---|---|---|---|---|---|---|---|---|---|---|
| | | | Copolymer No. | Monomer (A1) | | Monomer (A2) | | Amount added (part by mass) | Kind | Amount added (part by mass) | | Flow (mm) | pH (20°C) | |
| | | | | Kind | Monomer ratio (% by mass) | Kind | Monomer ratio (% by mass) | | | | | | | |
| Test Example | 1-1 | 15 | - | - | - | - | - | - | - | - | - | 117 | 5.8 | CE |
| | 1-2 | 15 | - | - | - | - | - | - | DEA | 0.014 | - | 117 | 6.4 | |
| | 1-3 | 15 | - | - | - | - | - | - | DEA | 0.028 | - | 117 | 7.7 | |
| | 1-4 | 15 | copolymer A1 | monomer (A1-1) | 76.7 | MAA | 23.3 | 0.06 | - | - | - | 118 | 5.8 | |
| | 1-5 | 15 | | | | | | | DEA | 0.014 | 4.29 | 142 | 6.4 | EX |
| | 1-6 | 15 | | | | | | | DEA | 0.028 | 2.14 | 151 | 7.7 | |
| | 1-7 | 15 | copolymer A2 | monomer (A1-1) | 87.5 | MAA | 12.5 | 0.06 | - | - | - | 118 | 5.8 | CE |
| | 1-8 | 15 | | | | | | | DEA | 0.002 | 30.0 | 119 | 5.85 | CE |
| | 1-9 | 15 | | | | | | | DEA | 0.007 | 8.57 | 132 | 6.0 | EX |
| | 1-10 | 15 | | | | | | | DEA | 0.014 | 4.29 | 138 | 6.3 | |
| | 1-11 | 15 | | | | | | | DEA | 0.021 | 2.86 | 145 | 6.8 | |
| | 1-12 | 15 | | | | | | | DEA | 0.028 | 2.14 | 149 | 7.6 | |
| | 1-13 | 15 | | | | | | | DEA | 0.042 | 1.43 | 151 | 8.8 | |
| | 1-14 | 5 | | | | | | | DEA | 0.0048 | 12.5 | 138 | 6.3 | |
| | 1-15 | 3 | | | | | | | DEA | 0.0028 | 21.4 | 138 | 6.3 | |
| | 1-16 | 15 | copolymer A3 | monomer (A1-1) | 94.02 | MAA | 6.0 | 0.06 | - | - | - | 117 | 5.8 | CE |
| | 1-17 | 15 | | | | | | | DEA | 0.014 | 4.29 | 124 | 6.4 | EX |
| | 1-18 | 15 | | | | | | | DEA | 0.028 | 2.14 | 133 | 7.7 | |
| | 1-19 | 15 | copolymer A4 | monomer (A1-1) | 97.13 | MAA | 2.9 | 0.06 | - | - | - | 117 | 5.7 | CE |
| | 1-20 | 15 | | | | | | | DEA | 0.014 | 4.29 | 117 | 6.4 | |
| | 1-21 | 15 | | | | | | | DEA | 0.028 | 2.14 | 117 | 7.6 | |
| | 1-22 | 15 | copolymer A5 | monomer (A1-1) monomer (A1-3) | 86.1 | MAA | 13.9 | 0.06 | - | - | - | 117 | 5.8 | CE |
| | 1-23 | 15 | | | | | | | DEA | 0.014 | 4.29 | 130 | 6.4 | EX |
| | 1-24 | 15 | | | | | | | DEA | 0.028 | 2.14 | 140 | 7.6 | |
| | 1-25 | 15 | copolymer A6 | monomer (A1-2) | 82.7 | MAA | 17.3 | 0.06 | - | - | - | 117 | 5.8 | CE |
| | 1-26 | 15 | | | | | | | DEA | 0.014 | 4.29 | 128 | 6.2 | EX |
| | 1-27 | 15 | | | | | | | DEA | 0.028 | 2.14 | 135 | 7.6 | |
| | 1-28 | 0 | copolymer A2 | monomer (A1-1) | 87.5 | MAA | 12.5 | 0.06 | - | - | - | 139 | 6.4 | CE |
| | 1-29 | 0 | | | | | | | TEA | 0.02 | 3.00 | 146 | 7.0 | EX |

Classification: EX: Example, CE: Comparative Example

In Table 1, MAA means methacrylic acid, and DEA means diethanolamine.
In Table 1, the monomer ratio of the monomer (A1) and the monomer (A2) each are the percentage by mass based on the total amount of the monomer (A1) and the monomer (A2).
In Table 1, the amount of the component (A) and the component (B) added each are in terms of part by mass per 100 parts by mass of gypsum.

Test Example 2

A liquid dispersant composition for gypsum having the ratio of the component (A) and the component (B) shown in Table 2 was prepared by controlling the amount of water to make a concentration of the component (A) of 30% by mass (solid content conversion), and evaluated for the uniformity immediately after the preparation and the hydrolysis rate after storing. The uniformity immediately after the preparation was evaluated by visual observation of the appearance, and one having a uniform appearance without separation was evaluated as "good", whereas one undergoing separation was evaluated as "poor". One having the evaluation of uniformity "poor" was not measured for the hydrolysis rate. One having the evaluation of uniformity "poor" is poor in uniformity of the composition and requires a strong agitation operation on every occasion of use, and therefore it is considered that the usability thereof on the actual work site is considerably poor.
The hydrolysis rate (%) after storage was evaluated by using the liquid dispersant composition for gypsum before storing and the same liquid dispersant composition for gypsum after storing at 40°C for 10 days in such a manner that methoxypolyethylene glycol (average EO addition molar number: 120), which was formed through hydrolysis of the monomer (A-1) as a constitutional component of the component (A) (i.e., the copolymer A2 or the copolymer A4), was quantitatively determined by liquid chromatography mass spectrum analysis (LC-MS) under the following conditions, and the hydrolysis rate was obtained according to the following expressions.

Case using copolymer A2:

$$\text{Hydrolysis rate (\%)} = 115.8 \times ((A-B)/(30-B))$$

Case using copolymer A4:

$$\text{Hydrolysis rate (\%)} = 104.3 \times ((A-B)/(30-B))$$

A: amount of methoxypolyethylene glycol (average EO addition molar number: 120) in the liquid dispersant composition for gypsum after storing (% by mass)
B: amount of methoxypolyethylene glycol (average EO addition molar number: 120) in the liquid dispersant composition for gypsum before storing (% by mass)

A smaller hydrolysis rate means better storage stability. The results are shown in Table 2. In the table, compounds that do not correspond to the component (B) are also shown in the columns therefor for convenience. The measurement conditions for LC-MS were as follows.

Measurement conditions for LC-MS

Column: Unison UK-C18 HT (50 × 2 mm) 3 μm, produced by Imtakt Corporation
Column temperature: 40°C

Eluent A: 0.1% trifluoroacetic acid (TFA) aqueous solution
Eluent B: 0.1% trifluoroacetic acid (TFA) acetonitrile solution

Gradient: A/B = 70/30 (0 min) -> A/B = 20/80 (3 - 5 min) -> A/B = 70/30 (5.1 - 8 min)
Flow rate: 0.5 mL/min
Injection amount: 5 μL
Measurement device: LC/MS 2010EV, produced by Shimadzu Corporation
The liquid dispersant composition for gypsum shown in Table 2 was used with the component (A) and the component (B) added to mixing water in amounts shown in Table 2, and a gypsum slurry was measured for the flow (mm) and the pH (20°C) in the same manner as in Test Example 1. The results are shown in Table 2. In this test example,

the gypsum slurry contains 142.5 g of the mixing water (W) and 250 g of the gypsum (G), which provides a W/G mass ratio of 0.57. A larger value for the flow means better flowability.

[Table 2]

| | | Amount of phosphoric acid added to gypsum (mg) | Liquid dispersant composition for gypsum | | | | | | | |
|---|---|---|---|---|---|---|---|---|---|---|
| | | | Component (A) | | Component (B) | | | pH (20°C) | Uniformity | Hydrolysis rate (%) |
| | | | Kind | Concentration in composition (% by mass) | Kind | Total number of carbon atoms in alkyl group | Concentration in composition (% by mass) | | | |
| Test Example | 2-1 | 15 | - | - | - | - | - | - | - | - |
| | 2-2 | 15 | Copolymer A2 | 30 | MEA | - | 4 | 10.7 | good | 0.3 |
| | 2-3 | 15 | | | DEA | - | 7 | 10.1 | good | 1 |
| | 2-4 | 15 | | | TEA | - | 10 | 9.0 | good | 0.5 |
| | 2-5 | 15 | | | TiPa | - | 12.5 | 9.2 | good | 0.4 |
| | 2-6 | 15 | | | M-DEA | - | 8 | 9.6 | good | 0.7 |
| | 2-7 | 15 | | | ethylenediamine | - | 2 | 10.6 | good | 0.5 |
| | 2-8 | 15 | | | diethylenetriamine | - | 3.5 | 10.8 | good | 0.4 |
| | 2-9 | 15 | | | polyethyleneimine (molecular weight: 600) | - | 4 | 11.2 | good | 0.9 |
| | 2-10 | 15 | | | ammonia | - | 1.5 | 10.7 | good | 0.6 |
| | 2-11 | 15 | | | pentylamine | 5 | 6 | 11.6 | good | 0.8 |
| | 2-12 | 15 | | | hexylamine | 6 | 6.5 | - | poor | - |
| | 2-13 | 15 | | | dipropylamine | 6 | 6.5 | 11.7 | good | 1.1 |
| | 2-14 | 15 | | | dibutylamine | 8 | 8.5 | - | poor | - |
| | 2-15 | 15 | | | trimethylamine | 3 | 4 | 11.8 | good | 1.2 |
| | 2-16 | 15 | | | triethylamine | 6 | 6.5 | - | poor | - |
| | 2-17 | 15 | | | NaOH | - | 2.5 | 13.8 | good | 4.1 |
| | 2-18 | 15 | | | NaOH | - | 0.2 | 11.1 | good | 1 |
| | 2-19 | 15 | | | $Ca(OH)_2$ | - | 3 | - | poor | - |

(continued)

[Table 2] (continued)

| | | Gypsum slurry | | | | | Classification |
|---|---|---|---|---|---|---|---|
| | | Component (A) | Component (B) | (A)/(B) (mass ratio) | Flow (mm) | pH (20°C) | |
| | | Amount added (part by mass) | Amount added (part by mass) | | | | |
| Test Example | 2-1 | - | - | - | 117 | 5.8 | Comparative Example |
| | 2-2 | 0.06 | 0.008 | 7.50 | 137 | 6.3 | Example |
| | 2-3 | | 0.014 | 4.29 | 138 | 6.3 | |
| | 2-4 | | 0.020 | 3.00 | 137 | 6.3 | |
| | 2-5 | | 0.025 | 2.40 | 137 | 6.3 | |
| | 2-6 | | 0.016 | 3.75 | 138 | 6.3 | |
| | 2-7 | | 0.004 | 15.00 | 137 | 6.4 | |
| | 2-8 | | 0.007 | 8.57 | 139 | 6.4 | |
| | 2-9 | | 0.008 | 7.50 | 139 | 6.4 | |
| | 2-10 | | 0.003 | 20.00 | 139 | 6.4 | |
| | 2-11 | | 0.012 | 5.00 | 137 | 6.3 | |
| | 2-12 | | - | - | - | - | Comparative Example |
| | 2-13 | | 0.013 | 4.62 | 138 | 6.3 | Example |
| | 2-14 | | - | - | - | - | Comparative Example |
| | 2-15 | | 0.008 | 7.50 | 138 | 6.3 | Example |
| | 2-16 | | - | - | - | - | Comparative Example |
| | 2-17 | | - | - | 139 | 6.4 | |
| | 2-18 | | 0.0004 | 150 | 120 | 5.8 | |
| | 2-19 | | - | - | - | - | |

The components in Table 2 are as follows.

MEA: monoethanolamine

DEA: diethanolamine
TEA: triethanolamine
TiPa: triisopropanolamine
M-DEA: N-methyldiethanolamine
Polyethyleneimine: molecular weight: 600, (Epomin, registered trade name, Model SP-006, produced by Nippon Shokubai Co., Ltd.

In Table 2, the amount of the component (A) and the component (B) added each are in terms of part by mass per 100 parts by mass of gypsum.

Test Example 3

The liquid dispersant compositions for gypsum of Test Example 2-3 and Test Example 2-17 in Test Example 2 were stored at 40°C for 10 days, and then a gypsum slurry was prepared by using each of the compositions in the same manner as in Test Example 2. The resulting gypsum slurry was measured for flow (mm) and pH (20°C) in the same manner as in Test Example 2. The results are shown in Table 3.

The liquid dispersant composition for gypsum of Test Example 2-17 as a comparative example has good uniformity immediately after the preparation, but is poor in storage stability, and the use thereof after storing fails to provide a gypsum slurry having a good flowability.

[Table 3]

| | | Amount of phosphoric acid added to gypsum (mg) | Liquid dispersant composition for gypsum | | | | | | | |
|---|---|---|---|---|---|---|---|---|---|---|
| | | | Component (A) | | Component (B) | | | pH (20°C) | Uniformity | Hydrolysis rate (%) |
| | | | Kind | Concentration in composition (% by mass) | Kind | Total number of carbon atoms in alkyl group | Concentration in composition (% by mass) | | | |
| Test Example | 2-3 | 15 | Copolymer A2 | 30 | TEA | - | 10 | 9.0 | good | 0.5 |
| | 2-17 | 15 | | | NaOH | - | 2.5 | 13.8 | good | 4.1 |

(continued)

[Table 3] (continued)

| | | Gypsum slurry * | | | | | Classification |
|---|---|---|---|---|---|---|---|
| | | Component (A) Amount added (part by mass) | Component (B) Amount added (part by mass) | (A)/(B) (mass ratio) | Flow (mm) | pH (20°C) | |
| Test Example | 2-3 | 0.06 | 0.020 | 3.00 | 137 | 6.3 | Example |
| | 2-17 | 0.06 | 0.005 | 12.0 | 120 | 6.3 | Comparative Example |

* Gypsum slurry prepared with liquid dispersant composition for gypsum after storing at 40°C for 10 days

**Claims**

1. A gypsum slurry comprising gypsum, (A) a copolymer (hereinafter referred to as a component (A)) obtained through polymerization of a monomer containing a monomer (A1) represented by the following general formula (A1) and a monomer (A2) represented by the following general formula (A2), (B) a nitrogen-containing compound (hereinafter referred to as a component (B)), and water,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less carbon atoms in total, a secondary amine having alkyl groups having 6 or less carbon atoms in total, and a tertiary amine having alkyl groups having 5 or less carbon atoms in total,
the alkanolamine as the component (B) being an alkanolamine having 1 or more and 10 or less carbon atoms and having 1 or more and 3 or less alkanol groups,
the alkylalkanolamine as the component (B) being an alkylalkanolamine having 2 or more and 10 or less carbon atoms and having 1 or 2 alkyl groups,
a content of the component (A) being 0.005 parts by mass or more and 1.0 part by mass or less per 100 parts by mass of gypsum,
a mass ratio of the component (A) and the component (B), (A)/(B), being 0.2 or more and 25 or less, and
the gypsum slurry having pH of 6.0 or more and 9.0 or less at 20°C:

[Formula 3]

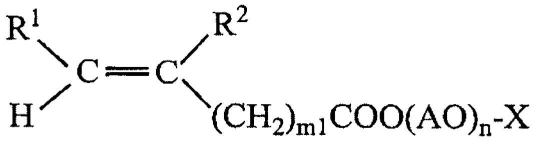

(A1)

wherein

$R^1$ and $R^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 4]

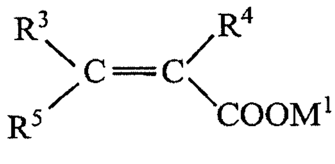

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom, or an alkali metal; and
m2 represents an integer of 0 or more and 2 or less.

2. The gypsum slurry according to claim 1, wherein a content of the component (B) is 0.0003 parts by mass or more and 0.2 parts by mass or less per 100 parts by mass of the gypsum.

**3.** The gypsum slurry according to claim 1 or 2, wherein the gypsum is gypsum that contains phosphoric acid.

**4.** The gypsum slurry according to any one of claims 1 to 3, wherein the mass ratio of the component (A) and the component (B), (A)/(B), is 2 or more and 15 or less.

**5.** A method for producing a gypsum slurry having pH of 6.0 or more and 9 . 0 or less at 20°C, comprising the following steps :

step 1: a step of mixing a component (A), a component (B), and water to provide a liquid composition for preparing gypsum, wherein the component (A) and the component (B) are mixed in a mass ratio, (A)/(B), of 0.2 or more and 25 or less; and
step 2: a step of mixing the liquid composition for preparing gypsum obtained in the step 1 and gypsum to provide a gypsum slurry,

the component (A) being a copolymer obtained through polymerization of a monomer containing a monomer (A1) represented by the following general formula (A1) and a monomer (A2) represented by the following general formula (A2), and the component (B) being a nitrogen-containing compound,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less in total carbon atoms, a secondary amine having alkyl groups having 6 or less in total carbon atoms, and a tertiary amine having alkyl groups having 5 or less in total carbon atoms,
the alkanolamine as the component (B) being an alkanolamine having 1 or more and 10 or less carbon atoms and having 1 or more and 3 or less alkanol groups, and
the alkylalkanolamine as the component (B) being an alkylalkanolamine having 2 or more and 10 or less carbon atoms and having 1 or 2 alkyl groups:

[Formula 5]

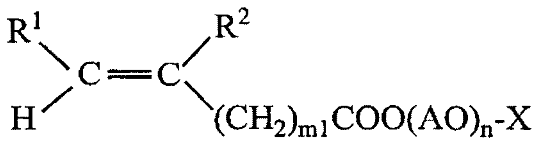

(A1)

wherein

$R^1$ and $R^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 6]

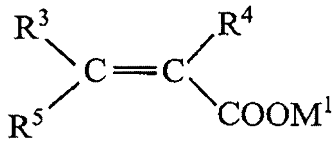

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom, or an alkali metal; and
m2 represents an integer of 0 or more and 2 or less.

**6.** The method for producing a gypsum slurry according to claim 5, wherein the component (A) is mixed in an amount of 0.005 parts by mass or more and 1.0 part by mass or less per 100 parts by mass of the gypsum.

**7.** The method for producing a gypsum slurry according to claim 5 or 6, wherein the component (B) is mixed in an amount of 0.0003 parts by mass or more and 0.2 parts by mass or less per 100 parts by mass of the gypsum.

**8.** The method for producing a gypsum slurry according to any one of claims 5 to 7, wherein the component (A) and the component (B) are mixed in the mass ratio, (A)/(B), of 2 or more and 15 or less.

**9.** Use of a composition comprising a component (A), a component (B), and water, as a dispersant for gypsum for enhancing flowability of a gypsum slurry,
the pH of the composition being 7.0 or more and 13.0 or less at 20°C,
a content of the component (A) being 5% by mass or more and 60% by mass or less in the composition,
a mass ratio of the component (A) and the component (B), (A)/(B), being 0.2 or more and 25 or less in the composition,
the component (A) being a copolymer obtained through polymerization of a monomer containing a monomer (A1) represented by the following general formula (A1) and a monomer (A2) represented by the following general formula (A2), and the component (B) being a nitrogen-containing compound,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less carbon atoms in total, a secondary amine having alkyl groups having 6 or less carbon atoms in total, and a tertiary amine having alkyl groups having 5 or less carbon atoms in total,
the alkanolamine as the component (B) being an alkanolamine having 1 or more and 10 or less carbon atoms and having 1 or more and 3 or less alkanol groups, and
the alkylalkanolamine as the component (B) being an alkylalkanolamine having 2 or more and 10 or less carbon atoms and having 1 or 2 alkyl groups:

[Formula 7]

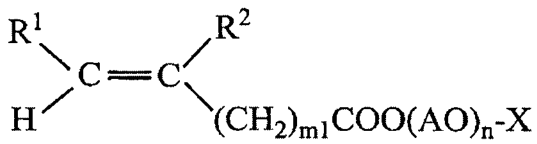

(A1)

wherein

$R^1$ and $R^2$ each independently represent a hydrogen atom or a methyl group;
m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 8]

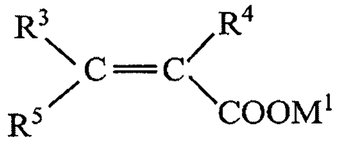

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom, or an alkali metal ; and
m2 represents an integer of 0 or more and 2 or less.

**10.** The use as a dispersant for gypsum according to claim 9, wherein the amount of the component (A) added is 0.005 parts by mass or more and 1.0 part by mass or less per 100 parts by mass of the gypsum.

**11.** The use as a dispersant for gypsum according to claim 9 or 10, wherein the amount of the component (B) added is 0.0003 parts by mass or more and 0.2 parts by mass or less per 100 parts by mass of the gypsum.

**12.** The use as a dispersant for gypsum according to any one of claims 9 to 11, wherein the mass ratio of the component (A) and the component (B), (A)/(B), is 2 or more and 15 or less.

**13.** A method for producing a liquid dispersant composition for gypsum, comprising mixing (A) a copolymer obtained through polymerization of a monomer containing a monomer (A1) represented by the following general formula (A1) and a monomer (A2) represented by the following general formula (A2) (hereinafter referred to as a component (A)), (B) a nitrogen-containing compound (hereinafter referred to as a component (B)), and water,
the component (A) being mixed in an amount of 5% by mass or more and 60% by mass or less based on the total mixed materials,
the component (A) and the component (B) being mixed in a mass ratio, (A)/(B), of 0.2 or more and 25 or less,
in the component (A), a ratio of a mass of the monomer (A2) with respect to a total mass of the monomer (A1) and the monomer (A2) being 4% by mass or more,
the component (B) being one or more kinds of a nitrogen-containing compound selected from ammonia, an alkylamine, an alkanolamine, an alkylalkanolamine, ethylenediamine, diethylenetriamine, triethylenetetramine, tetraethylenepentamine, and a polyethyleneimine,
the alkylamine as the component (B) being an alkylamine selected from a primary amine having an alkyl group having 5 or less carbon atoms in total, a secondary amine having alkyl groups having 6 or less carbon atoms in total, and a tertiary amine having alkyl groups having 5 or less carbon atoms in total,
the alkanolamine as the component (B) being an alkanolamine having 1 or more and 10 or less carbon atoms and having 1 or more and 3 or less alkanol groups,
the alkylalkanolamine as the component (B) being an alkylalkanolamine having 2 or more and 10 or less carbon atoms and having 1 or 2 alkyl groups, and
the liquid dispersant composition for gypsum having pH of 7.0 or more and 13.0 or less at 20°C:

[Formula 9]

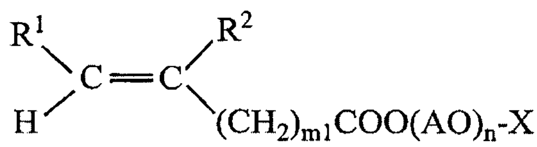

(A1)

wherein

$R^1$ and $R^2$ each independently represent a hydrogen atom or a methyl group;

m1 represents an integer of 0 or more and 2 or less;
AO represents an alkyleneoxy group having 2 or 3 carbon atoms;
n represents an average addition molar number of AO, which is a number of 4 or more and 300 or less; and
X represents a hydrogen atom or an alkyl group having 1 or more and 3 or less carbon atoms,

[Formula 10]

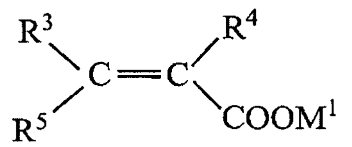

(A2)

wherein

$R^3$, $R^4$ and $R^5$ each independently represent a hydrogen atom, a methyl group, or $(CH_2)_{m2}COOM^2$;
$M^1$ and $M^2$ each independently represent a hydrogen atom, or an alkali metal; and
m2 represents an integer of 0 or more and 2 or less.

**14.** The production method according to claim 13, wherein the liquid dispersant composition for gypsum is for gypsum that contains phosphoric acid.

**15.** The production method according to claim 13 or 14, wherein the component (A) and the component (B) are mixed in a the mass ratio, (A)/(B), of 2 or more and 15 or less.

### Patentansprüche

**1.** Gipsaufschlämmung, umfassend Gips, (A) ein Copolymer (nachfolgend als Komponente (A) bezeichnet), erhalten durch Polymerisation eines Monomers, enthaltend ein Monomer (A1) der folgenden allgemeinen Formel (A1) und ein Monomer (A2) der folgenden allgemeinen Formel (A2), (B) eine stickstoffhaltige Verbindung (nachfolgend als Komponente (B) bezeichnet) und Wasser,
wobei in der Komponente (A) ein Massenanteil des Monomers (A2) in Bezug auf eine Gesamtmasse des Monomers (A1) und des Monomers (A2) 4 Massenprozent oder mehr beträgt,
wobei die Komponente (B) eine oder mehrere Arten einer stickstoffhaltigen Verbindung ist, die ausgewählt ist aus Ammoniak, einem Alkylamin, einem Alkanolamin, einem Alkylalkanolamin, Ethylendiamin, Diethylentriamin, Triethylentetramin, Tetraethylenpentamin und einem Polyethylenimin,
wobei das Alkylamin als die Komponente (B) ein Alkylamin ist, das ausgewählt ist aus einem primären Amin mit einer Alkylgruppe mit insgesamt 5 oder weniger Kohlenstoffatomen, einem sekundären Amin mit Alkylgruppen mit insgesamt 6 oder weniger Kohlenstoffatomen und einem tertiären Amin mit Alkylgruppen mit insgesamt 5 oder weniger Kohlenstoffatomen, ist,
wobei das Alkanolamin als die Komponente (B) ein Alkanolamin mit 1 oder mehr und 10 oder weniger Kohlenstoffatomen und mit 1 oder mehr und 3 oder weniger Alkanolgruppen ist,
wobei das Alkylalkanolamin als die Komponente (B) ein Alkylalkanolamin mit 2 oder mehr und 10 oder weniger Kohlenstoffatomen und mit 1 oder 2 Alkylgruppen ist,
wobei ein Gehalt der Komponente (A) 0,005 Massenteile oder mehr und 1,0 Massenteile oder weniger pro 100 Massenteile Gips beträgt,
wobei ein Massenverhältnis der Komponente (A) und der Komponente (B), (A)/(B), 0,2 oder mehr und 25 oder weniger beträgt, und
wobei die Gipsaufschlämmung bei 20°C einen pH-Wert von 6,0 oder mehr und 9,0 oder weniger aufweist

[Formel 3]

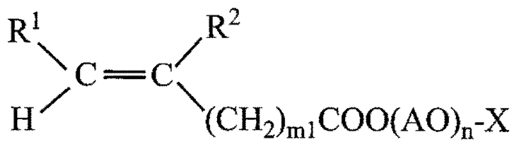

(A1)

wobei

$R^1$ und $R^2$ jeweils unabhängig voneinander ein Wasserstoffatom oder eine Methylgruppe darstellen;
m1 eine ganze Zahl von 0 oder mehr und 2 oder weniger darstellt;
AO eine Alkylenoxygruppe mit 2 oder 3 Kohlenstoffatomen darstellt;
n eine mittlere Additionsmolzahl von AO, die eine Zahl von 4 oder mehr und 300 oder weniger ist, darstellt; und
X ein Wasserstoffatom oder eine Alkylgruppe mit 1 oder mehr und 3 oder weniger Kohlenstoffatomen darstellt,

[Formel 4]

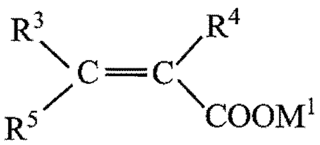

(A2)

$R^3$, $R^4$ und $R^5$ jeweils unabhängig voneinander ein Wasserstoffatom, eine Methylgruppe oder $(CH_2)_{m2}COOM^2$ darstellen;
$M^1$ und $M^2$ jeweils unabhängig voneinander ein Wasserstoffatom oder ein Alkalimetall darstellen; und
m2 eine ganze Zahl von 0 oder mehr und 2 oder weniger darstellt.

**2.** Gipsaufschlämmung gemäß Anspruch 1, wobei ein Gehalt der Komponente (B) 0,0003 Massenteile oder mehr und 0,2 Massenteile oder weniger pro 100 Massenteile des Gipses beträgt.

**3.** Gipsaufschlämmung gemäß Anspruch 1 oder 2, wobei der Gips ein phosphorsäurehaltiger Gips ist.

**4.** Gipsaufschlämmung gemäß mindestens einem der Ansprüche 1 bis 3, wobei das Massenverhältnis der Komponente (A) und der Komponente (B), (A)/(B), 2 oder mehr und 15 oder weniger beträgt.

**5.** Verfahren zur Herstellung einer Gipsaufschlämmung, die bei 20°C einen pH-Wert von 6,0 oder mehr und 9,0 oder weniger aufweist, umfassend die folgenden Schritte:

Schritt 1: einen Schritt des Mischens einer Komponente (A), einer Komponente (B) und Wasser, um eine flüssige Zusammensetzung zur Herstellung von Gips bereitzustellen, wobei die Komponente (A) und die Komponente (B) in einem Massenverhältnis (A)/(B) von 0,2 oder mehr und 25 oder weniger gemischt werden; und
Schritt 2: einen Schritt des Mischens der in Schritt 1 erhaltenen flüssigen Zusammensetzung zur Herstellung von Gips und Gips, um eine Gipsaufschlämmung bereitzustellen,

wobei die Komponente (A) ein Copolymer ist, das durch Polymerisation eines Monomers, enthaltend ein Monomer (A1) der folgenden allgemeinen Formel (A1) und ein Monomer (A2) der folgenden allgemeinen Formel (A2), erhalten wird, und die Komponente (B) eine stickstoffhaltige Verbindung ist,
wobei in der Komponente (A) ein Massenanteil des Monomers (A2) in Bezug auf eine Gesamtmasse des Monomers (A1) und des Monomers (A2) 4 Massenprozent oder mehr beträgt,
wobei die Komponente (B) eine oder mehrere Arten einer stickstoffhaltigen Verbindung ist, die ausgewählt ist aus Ammoniak, einem Alkylamin, einem Alkanolamin, einem Alkylalkanolamin, Ethylendiamin, Diethylentriamin, Triethylentetramin, Tetraethylenpentamin und einem Polyethylenimin,
wobei das Alkylamin als die Komponente (B) ein Alkylamin ist, das ausgewählt ist aus einem primären Amin mit

einer Alkylgruppe mit insgesamt 5 oder weniger Kohlenstoffatomen, einem sekundären Amin mit Alkylgruppen mit insgesamt 6 oder weniger Kohlenstoffatomen und einem tertiären Amin mit Alkylgruppen mit insgesamt 5 oder weniger Kohlenstoffatomen, ist,
wobei das Alkanolamin als die Komponente (B) ein Alkanolamin mit 1 oder mehr und 10 oder weniger Kohlenstoffatomen und mit 1 oder mehr und 3 oder weniger Alkanolgruppen ist, und
wobei das Alkylalkanolamin als die Komponente (B) ein Alkylalkanolamin mit 2 oder mehr und 10 oder weniger Kohlenstoffatomen und mit 1 oder 2 Alkylgruppen ist

[Formel 5]

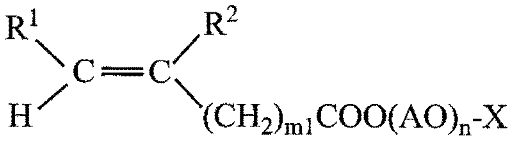

(A1)

wobei

$R^1$ und $R^2$ jeweils unabhängig voneinander ein Wasserstoffatom oder eine Methylgruppe darstellen;
m1 eine ganze Zahl von 0 oder mehr und 2 oder weniger darstellt;
AO eine Alkylenoxygruppe mit 2 oder 3 Kohlenstoffatomen darstellt;
n eine mittlere Additionsmolzahl von AO, die eine Zahl von 4 oder mehr und 300 oder weniger ist, darstellt; und
X ein Wasserstoffatom oder eine Alkylgruppe mit 1 oder mehr und 3 oder weniger Kohlenstoffatomen darstellt,

[Formel 6]

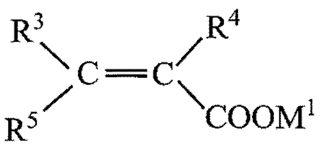

(A2)

wobei

$R^3$, $R^4$ und $R^5$ jeweils unabhängig voneinander ein Wasserstoffatom, eine Methylgruppe oder $(CH_2)_{m2}COOM^2$ darstellen;
$M^1$ und $M^2$ jeweils unabhängig voneinander ein Wasserstoffatom oder ein Alkalimetall darstellen; und
m2 eine ganze Zahl von 0 oder mehr und 2 oder weniger darstellt.

6. Verfahren zur Herstellung einer Gipsaufschlämmung gemäß Anspruch 5, wobei die Komponente (A) in einer Menge von 0,005 Massenteilen oder mehr und 1,0 Massenteilen oder weniger pro 100 Massenteile des Gipses beigemischt wird.

7. Verfahren zur Herstellung einer Gipsaufschlämmung gemäß Anspruch 5 oder 6, wobei die Komponente (B) in einer Menge von 0,0003 Massenteilen oder mehr und 0,2 Massenteilen oder weniger pro 100 Massenteile des Gipses beigemischt wird.

8. Verfahren zur Herstellung einer Gipsaufschlämmung gemäß mindestens einem der Ansprüche 5 bis 7, wobei die Komponente (A) und die Komponente (B) in dem Massenverhältnis (A)/(B) von 2 oder mehr und 15 oder weniger gemischt werden.

9. Verwendung einer Zusammensetzung, umfassend eine Komponente (A), eine Komponente (B) und Wasser, als Dispergiermittel für Gips zur Verbesserung der Fließfähigkeit einer Gipsaufschlämmung,
wobei der pH-Wert der Zusammensetzung bei 20°C 7,0 oder mehr und 13,0 oder weniger beträgt,

wobei ein Gehalt der Komponente (A) in der Zusammensetzung 5 Massenprozent oder mehr und 60 Massenprozent oder weniger beträgt,

wobei ein Massenverhältnis der Komponente (A) und der Komponente (B), (A)/(B), in der Zusammensetzung 0,2 oder mehr und 25 oder weniger beträgt,

wobei die Komponente (A) ein Copolymer ist, das durch Polymerisation eines Monomers, enthaltend ein Monomer (A1) der folgenden allgemeinen Formel (A1) und ein Monomer (A2) der folgenden allgemeinen Formel (A2), erhalten wird, und die Komponente (B) eine stickstoffhaltige Verbindung ist,

wobei in der Komponente (A) ein Massenanteil des Monomers (A2) in Bezug auf eine Gesamtmasse des Monomers (A1) und des Monomers (A2) 4 Massenprozent oder mehr beträgt,

wobei die Komponente (B) eine oder mehrere Arten einer stickstoffhaltigen Verbindung ist, die ausgewählt ist aus Ammoniak, einem Alkylamin, einem Alkanolamin, einem Alkylalkanolamin, Ethylendiamin, Diethylentriamin, Triethylentetramin, Tetraethylenpentamin und einem Polyethylenimin,

wobei das Alkylamin als die Komponente (B) ein Alkylamin ist, das ausgewählt ist aus einem primären Amin mit einer Alkylgruppe mit insgesamt 5 oder weniger Kohlenstoffatomen, einem sekundären Amin mit Alkylgruppen mit insgesamt 6 oder weniger Kohlenstoffatomen und einem tertiären Amin mit Alkylgruppen mit insgesamt 5 oder weniger Kohlenstoffatomen, ist,

wobei das Alkanolamin als die Komponente (B) ein Alkanolamin mit 1 oder mehr und 10 oder weniger Kohlenstoffatomen und mit 1 oder mehr und 3 oder weniger Alkanolgruppen ist, und

wobei das Alkylalkanolamin als die Komponente (B) ein Alkylalkanolamin mit 2 oder mehr und 10 oder weniger Kohlenstoffatomen und mit 1 oder 2 Alkylgruppen ist

[Formel 7]

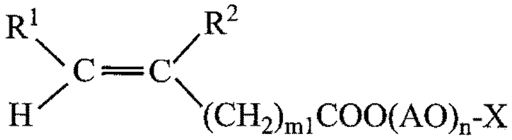

(A1)

wobei

R[1] und R[2] jeweils unabhängig voneinander ein Wasserstoffatom oder eine Methylgruppe darstellen;
m1 eine ganze Zahl von 0 oder mehr und 2 oder weniger darstellt;
AO eine Alkylenoxygruppe mit 2 oder 3 Kohlenstoffatomen darstellt;
n eine mittlere Additionsmolzahl von AO, die eine Zahl von 4 oder mehr und 300 oder weniger ist, darstellt; und
X ein Wasserstoffatom oder eine Alkylgruppe mit 1 oder mehr und 3 oder weniger Kohlenstoffatomen darstellt,

[Formel 8]

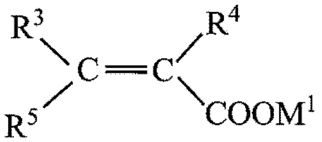

(A2)

wobei

$R^3$, $R^4$ und $R^5$ jeweils unabhängig voneinander ein Wasserstoffatom, eine Methylgruppe oder $(CH_2)_{m2}COOM^2$ darstellen;
$M^1$ und $M^2$ jeweils unabhängig voneinander ein Wasserstoffatom oder ein Alkalimetall darstellen; und
m2 eine ganze Zahl von 0 oder mehr und 2 oder weniger darstellt.

**10.** Verwendung als Dispergiermittel für Gips gemäß Anspruch 9, wobei die Menge der zugegebenen Komponente (A) 0,005 Massenteile oder mehr und 1,0 Massenteile oder weniger pro 100 Massenteile des Gipses beträgt.

11. Verwendung als Dispergiermittel für Gips gemäß Anspruch 9 oder 10, wobei die Menge der zugegebenen Komponente (B) 0,0003 Massenteile oder mehr und 0,2 Massenteile oder weniger pro 100 Massenteile des Gipses beträgt.

12. Verwendung als Dispergiermittel für Gips gemäß mindestens einem der Ansprüche 9 bis 11, wobei das Massenverhältnis der Komponente (A) und der Komponente (B), (A)/(B), 2 oder mehr und 15 oder weniger beträgt.

13. Verfahren zur Herstellung einer flüssigen Dispergiermittelzusammensetzung für Gips, umfassend das Mischen (A) eines Copolymers, erhalten durch Polymerisation eines Monomers, enthaltend ein Monomer (A1) der folgenden allgemeinen Formel (A1) und ein Monomer (A2) der folgenden allgemeinen Formel (A2) (nachfolgend als Komponente (A) bezeichnet), (B) einer stickstoffhaltigen Verbindung (nachfolgend als Komponente (B) bezeichnet) und Wasser,
wobei die Komponente (A) in einer Menge von 5 Massenprozent oder mehr und 60 Massenprozent oder weniger, bezogen auf die gesamten gemischten Materialien, beigemischt wird,
wobei die Komponente (A) und die Komponente (B) in einem Massenverhältnis (A)/(B) von 0,2 oder mehr und 25 oder weniger gemischt werden,
wobei in der Komponente (A) ein Massenanteil des Monomers (A2) in Bezug auf eine Gesamtmasse des Monomers (A1) und des Monomers (A2) 4 Massenprozent oder mehr beträgt,
wobei die Komponente (B) eine oder mehrere Arten einer stickstoffhaltigen Verbindung ist, die ausgewählt ist aus Ammoniak, einem Alkylamin, einem Alkanolamin, einem Alkylalkanolamin, Ethylendiamin, Diethylentriamin, Triethylentetramin, Tetraethylenpentamin und einem Polyethylenimin,
wobei das Alkylamin als die Komponente (B) ein Alkylamin ist, das ausgewählt ist aus einem primären Amin mit einer Alkylgruppe mit insgesamt 5 oder weniger Kohlenstoffatomen, einem sekundären Amin mit Alkylgruppen mit insgesamt 6 oder weniger Kohlenstoffatomen und einem tertiären Amin mit Alkylgruppen mit insgesamt 5 oder weniger Kohlenstoffatomen, ist,
wobei das Alkanolamin als die Komponente (B) ein Alkanolamin mit 1 oder mehr und 10 oder weniger Kohlenstoffatomen und mit 1 oder mehr und 3 oder weniger Alkanolgruppen ist, und
wobei das Alkylalkanolamin als die Komponente (B) ein Alkylalkanolamin mit 2 oder mehr und 10 oder weniger Kohlenstoffatomen und mit 1 oder 2 Alkylgruppen ist, und
wobei die flüssige Dispergiermittelzusammensetzung für Gips bei 20°C einen pH-Wert von 7,0 oder mehr und 13,0 oder weniger aufweist

[Formel 9]

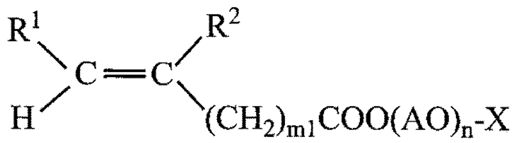

(A1)

wobei

R1 und R2 jeweils unabhängig voneinander ein Wasserstoffatom oder eine Methylgruppe darstellen;
m1 eine ganze Zahl von 0 oder mehr und 2 oder weniger darstellt;
AO eine Alkylenoxygruppe mit 2 oder 3 Kohlenstoffatomen darstellt;
n eine mittlere Additionsmolzahl von AO, die eine Zahl von 4 oder mehr und 300 oder weniger ist, darstellt; und
X ein Wasserstoffatom oder eine Alkylgruppe mit 1 oder mehr und 3 oder weniger Kohlenstoffatomen darstellt,

[Formel 10]

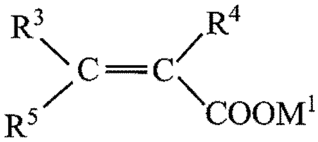

(A2)

wobei

$R^3$, $R^4$ und $R^5$ jeweils unabhängig voneinander ein Wasserstoffatom, eine Methylgruppe oder $(CH_2)_{m2}COOM^2$ darstellen;
$M^1$ und $M^2$ jeweils unabhängig voneinander ein Wasserstoffatom oder ein Alkalimetall darstellen; und
m2 eine ganze Zahl von 0 oder mehr und 2 oder weniger darstellt.

**14.** Herstellungsverfahren gemäß Anspruch 13, wobei die flüssige Dispergiermittelzusammensetzung für Gips für ein phosphorsäurehaltiges Gips ist.

**15.** Herstellungsverfahren gemäß Anspruch 13 oder 14, wobei die Komponente (A) und die Komponente (B) in dem Massenverhältnis (A)/(B) von 2 oder mehr und 15 oder weniger gemischt werden.

**Revendications**

**1.** Pâte de gypse comprenant du gypse, (A) un copolymère (ci-après dénommé composant (A)) obtenu par l'intermédiaire d'une polymérisation d'un monomère contenant un monomère (A1) représenté par la formule générale (A1) suivante et un monomère (A2) représenté par la formule générale (A2) suivante, (B) un composé contenant de l'azote (ci-après dénommé composant (B)), et de l'eau,
dans le composant (A), un rapport d'une masse du monomère (A2) par rapport à une masse totale du monomère (A1) et du monomère (A2) étant supérieur ou égal à 4 % en masse,
le composant (B) étant une ou plusieurs sortes d'un composé contenant de l'azote sélectionné parmi l'ammoniac, une alkylamine, une alcanolamine, une alkylalcanolamine, une éthylènediamine, une diéthylènetriamine, une triéthylènetétramine, une tétraéthylènepentamine, et une polyéthylèneimine,
l'alkylamine en tant que composant (B) étant une alkylamine sélectionnée parmi une aminé primaire ayant un groupement alkyle ayant au plus 5 atomes de carbone au total, une aminé secondaire ayant des groupements alkyle ayant au plus 6 atomes de carbone au total, et une aminé tertiaire ayant des groupements alkyle ayant au plus 5 atomes de carbone au total,
l'alcanolamine en tant que composant (B) étant une alcanolamine ayant au moins 1 et au plus 10 atomes de carbone et ayant au moins 1 et au plus 3 groupements alkanol,
l'alkylalcanolamine en tant que composant (B) étant une alkylalcanolamine ayant au moins 2 et au plus 10 atomes de carbone et ayant 1 ou 2 groupements alkyle,
une teneur en composant (A) étant supérieure ou égale à 0,005 partie en masse et inférieure ou égale à 1,0 partie en masse pour 100 parties en masse de gypse,
un rapport massique entre le composant (A) et le composant (B), (A)/(B), étant supérieur ou égal à 0,2 et inférieur ou égal à 25, et
la pâte de gypse ayant un pH supérieur ou égal à 6,0 et inférieur ou égal à 9,0 à 20°C:

[Formule 3]

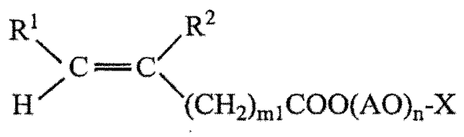

(A1)

dans laquelle

$R^1$ et $R^2$ représentent chacun indépendamment un atome d'hydrogène ou un groupement méthyle ;
m1 représente un entier supérieur ou égal à 0 et inférieur ou égal à 2 ;
AO représente un groupement alkylèneoxy ayant 2 ou 3 atomes de carbone ;
n représente un nombre molaire moyen d'addition de AO, qui est un nombre supérieur ou égal à 4 et inférieur ou égal à 300 ; et
X représente un atome d'hydrogène ou un groupement alkyle ayant au moins 1 et au plus 3 atomes de carbone,

[Formule 4]

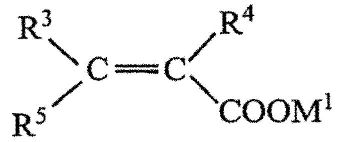

( A2 )

dans laquelle

$R^3$, $R^4$ et $R^5$ représentent chacun indépendamment un atome d'hydrogène, un groupement méthyle, ou $(CH_2)_{m2}COOM^2$;
$M^1$ et $M^2$ représentent chacun indépendamment un atome d'hydrogène, ou un métal alcalin ; et
m2 représente un entier supérieur ou égal à 0 et inférieur ou égal à 2.

**2.** Pâte de gypse selon la revendication 1, dans laquelle une teneur en composant (B) est supérieure ou égale à 0,0003 partie en masse et inférieure ou égale à 0,2 partie en masse pour 100 parties en masse de gypse.

**3.** Pâte de gypse selon la revendication 1 ou 2, dans laquelle le gypse est du gypse qui contient de l'acide phosphorique.

**4.** Pâte de gypse selon l'une quelconque des revendications 1 à 3, dans laquelle le rapport massique entre le composant (A) et le composant (B), (A)/(B), est supérieur ou égal à 2 et inférieur ou égal à 15.

**5.** Procédé pour produire une pâte de gypse ayant un pH supérieur ou égal à 6,0 et inférieur ou égal à 9,0 à 20 °C, comprenant les étapes suivantes :

étape 1: une étape de mélange d'un composant (A), d'un composant (B) et d'eau pour fournir une composition liquide pour préparer du gypse, dans lequel le composant (A) et le composant (B) sont mélangés selon un rapport massique, (A)/(B), supérieur ou égal à 0,2 et inférieur ou égal à 25 ; et
étape 2 : une étape de mélange de la composition liquide pour la préparation de gypse obtenue à l'étape 1 et de gypse pour fournir une pâte de gypse,

le composant (A) étant un copolymère obtenu par l'intermédiaire d'une polymérisation d'un monomère contenant un monomère (A1) représenté par la formule générale (A1) suivante et un monomère (A2) représenté par la formule générale (A2) suivante, et le composant (B) étant un composé contenant de l'azote,
dans le composant (A), un rapport d'une masse du monomère (A2) par rapport à une masse totale du monomère (A1) et du monomère (A2) étant supérieur ou égal à 4 % en masse,
le composant (B) étant une ou plusieurs sortes d'un composé contenant de l'azote sélectionné parmi l'ammoniac, une alkylamine, une alcanolamine, une alkylalcanolamine, une éthylènediamine, une diéthylènetriamine, une triéthylènetétramine, une tétraéthylènepentamine, et une polyéthylèneimine,
l'alkylamine en tant que composant (B) étant une alkylamine sélectionnée parmi une aminé primaire ayant un groupement alkyle ayant au plus 5 atomes de carbone au total, une aminé secondaire ayant des groupements alkyle ayant au plus 6 atomes de carbone au total, et une aminé tertiaire ayant des groupements alkyle ayant au plus 5 atomes de carbone au total,
l'alcanolamine en tant que composant (B) étant une alcanolamine ayant au moins 1 et au plus 10 atomes de carbone et ayant au moins 1 et au plus 3 groupements alkanol,
l'alkylalcanolamine en tant que composant (B) étant une alkylalcanolamine ayant au moins 2 et au plus 10 atomes de carbone et ayant 1 ou 2 groupements alkyle :

[Formule 5]

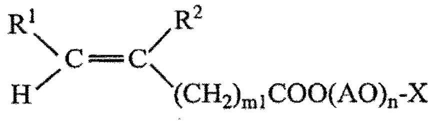

( A1 )

dans lequel

$R^1$ et $R^2$ représentent chacun indépendamment un atome d'hydrogène ou un groupement méthyle ;
m1 représente un entier supérieur ou égal à 0 et inférieur ou égal à 2 ;
AO représente un groupement alkylèneoxy ayant 2 ou 3 atomes de carbone ;
n représente un nombre molaire moyen d'addition de AO, qui est un nombre supérieur ou égal à 4 et inférieur ou égal à 300 ; et
X représente un atome d'hydrogène ou un groupement alkyle ayant au moins 1 et au plus 3 atomes de carbone,

[Formule 6]

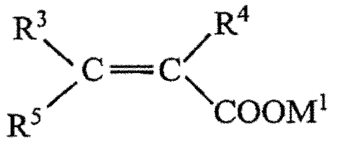

(A2)

dans lequel

$R^3$, $R^4$ et $R^5$ représentent chacun indépendamment un atome d'hydrogène, un groupement méthyle, ou $(CH_2)_{m2}COOM^2$;
$M^1$ et $M^2$ représentent chacun indépendamment un atome d'hydrogène, ou un métal alcalin ; et
m2 représente un entier supérieur ou égal à 0 et inférieur ou égal à 2.

**6.** Procédé pour produire une pâte de gypse selon la revendication 5, dans lequel le composant (A) est mélangé en une quantité supérieure ou égale à 0,005 partie en masse et inférieure ou égale à 1,0 partie en masse pour 100 parties en masse de gypse.

**7.** Procédé pour produire une pâte de gypse selon la revendication 5 ou 6, dans lequel le composant (B) est mélangé en une quantité supérieure ou égale à 0,0003 partie en masse et inférieure ou égale à 0,2 partie en masse pour 100 parties en masse de gypse.

**8.** Procédé pour produire une pâte de gypse selon l'une quelconque des revendications 5 à 7, dans lequel le composant (A) et le composant (B) sont mélangés selon le rapport massique, (A)/(B), supérieur ou égal à 2 et inférieur ou égal à 15.

**9.** Utilisation d'une composition comprenant un composant (A), un composant (B), et de l'eau, en tant qu'agent dispersant pour du gypse pour améliorer la fluidité d'une pâte de gypse,
le pH de la composition étant supérieur ou égal à 7,0 et inférieur ou égal à 13,0 à 20 °C,
une teneur en composant (A) étant supérieure ou égale à 5 % en masse et inférieure ou égale à 60 % en masse dans la composition,
un rapport massique entre le composant (A) et le composant (B) (A)/(B), étant supérieur ou égal à 0,2 et inférieur ou égal à 25 dans la composition, et
le composant (A) étant un copolymère obtenu par l'intermédiaire d'une polymérisation d'un monomère contenant un monomère (A1) représenté par la formule générale (A1) suivante et un monomère (A2) représenté par la formule générale (A2) suivante, et le composant (B) étant un composé contenant de l'azote,
dans le composant (A), un rapport d'une masse du monomère (A2) par rapport à une masse totale du monomère (A1) et du monomère (A2) étant supérieur ou égal à 4 % en masse,
le composant (B) étant une ou plusieurs sortes d'un composé contenant de l'azote sélectionné parmi l'ammoniac, une alkylamine, une alcanolamine, une alkylalcanolamine, une éthylènediamine, une diéthylènetriamine, une triéthylènetétramine, une tétraéthylènepentamine, et une polyéthylèneimine,
l'alkylamine en tant que composant (B) étant une alkylamine sélectionnée parmi une aminé primaire ayant un groupement alkyle ayant au plus 5 atomes de carbone au total, une aminé secondaire ayant des groupements alkyle ayant au plus 6 atomes de carbone au total, et une aminé tertiaire ayant des groupements alkyle ayant au plus 5 atomes de carbone au total,
l'alcanolamine en tant que composant (B) étant une alcanolamine ayant au moins 1 et au plus 10 atomes de carbone et ayant au moins 1 et au plus 3 groupements alkanol, et
l'alkylalcanolamine en tant que composant (B) étant une alkylalcanolamine ayant au moins 2 et au plus 10 atomes

de carbone et ayant 1 ou 2 groupements alkyle :

[Formule 7]

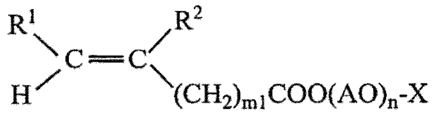

( A1 )

dans laquelle

$R^1$ et $R^2$ représentent chacun indépendamment un atome d'hydrogène ou un groupement méthyle ;
m1 représente un entier supérieur ou égal à 0 et inférieur ou égal à 2 ;
AO représente un groupement alkylèneoxy ayant 2 ou 3 atomes de carbone ;
n représente un nombre molaire moyen d'addition de AO, qui est un nombre supérieur ou égal à 4 et inférieur ou égal à 300 ; et
X représente un atome d'hydrogène ou un groupement alkyle ayant au moins 1 et au plus 3 atomes de carbone,

[Formule 8]

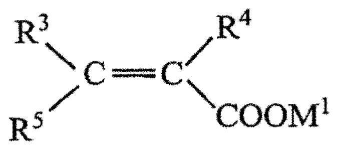

( A2 )

dans laquelle

$R^3$, $R^4$ et $R^5$ représentent chacun indépendamment un atome d'hydrogène, un groupement méthyle, ou $(CH_2)_{m2}COOM^2$;
$M^1$ et $M^2$ représentent chacun indépendamment un atome d'hydrogène, ou un métal alcalin ; et
m2 représente un entier supérieur ou égal à 0 et inférieur ou égal à 2.

**10.** Utilisation en tant qu'agent dispersant pour du gypse selon la revendication 9, dans laquelle la quantité du composant (A) ajoutée est supérieure ou égale à 0,005 partie en masse et inférieure ou égale à 1,0 partie en masse pour 100 parties en masse de gypse.

**11.** Utilisation en tant qu'agent dispersant pour du gypse selon la revendication 9 ou 10, dans laquelle la quantité du composant (B) ajoutée est supérieure ou égale à 0,0003 partie en masse et inférieure ou égale à 0,2 partie en masse pour 100 parties en masse de gypse.

**12.** Utilisation en tant qu'agent dispersant pour du gypse selon l'une quelconque des revendications 9 à 11, dans laquelle le rapport massique entre le composant (A) et le composant (B), (A)/(B), est supérieur ou égal à 2 et inférieur ou égal à 15.

**13.** Procédé pour produire une composition d'agent dispersant liquide pour du gypse, comprenant le mélange (A) d'un copolymère obtenu par l'intermédiaire d'une polymérisation d'un monomère contenant un monomère (A1) représenté par la formule générale (A1) suivante et un monomère (A2) représenté par la formule générale (A2) suivante (ci-après dénommé composant (A)), (B) un composé contenant de l'azote (ci-après dénommé composant (B)), et de l'eau,
le composant (A) étant mélangé en une quantité supérieure ou égale à 5 % en masse et inférieure ou égale à 60 % en masse sur la base des matières mélangées totales,
le composant (A) et le composant (B) étant mélangés selon un rapport massique, (A)/(B), supérieur ou égal à 0,2 et inférieur ou égal à 25,
dans le composant (A), un rapport d'une masse du monomère (A2) par rapport à une masse totale du monomère (A1) et du monomère (A2) étant supérieur ou égal à 4 % en masse,
le composant (B) étant une ou plusieurs sortes d'un composé contenant de l'azote sélectionné parmi l'ammoniac, une alkylamine, une alcanolamine, une alkylalcanolamine, une éthylènediamine, une diéthylènetriamine, une triéthylènetétramine, une tétraéthylènepentamine, et une polyéthylèneimine,

l'alkylamine en tant que composant (B) étant une alkylamine sélectionnée parmi une amine primaire ayant un groupement alkyle ayant au plus 5 atomes de carbone au total, une amine secondaire ayant des groupements alkyle ayant au plus 6 atomes de carbone au total, et une amine tertiaire ayant des groupements alkyle ayant au plus 5 atomes de carbone au total,

l'alcanolamine en tant que composant (B) étant une alcanolamine ayant au moins 1 et au plus 10 atomes de carbone et ayant au moins 1 et au plus 3 groupements alkanol,

l'alkylalcanolamine en tant que composant (B) étant une alkylalcanolamine ayant au moins 2 et au plus 10 atomes de carbone et ayant 1 ou 2 groupements alkyle, et

la composition d'agent dispersant liquide pour du gypse ayant un pH supérieur ou égal à 7,0 et inférieur ou égal à 13,0 à 20 °C :

[Formule 9]

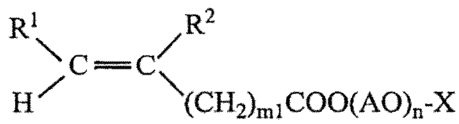

(A1)

dans lequel

R1 et R2 représentent chacun indépendamment un atome d'hydrogène ou un groupement méthyle ;

m1 représente un entier supérieur ou égal à 0 et inférieur ou égal à 2 ;

AO représente un groupement alkylèneoxy ayant 2 ou 3 atomes de carbone ;

n représente un nombre molaire moyen d'addition de AO, qui est un nombre supérieur ou égal à 4 et inférieur ou égal à 300 ; et

X représente un atome d'hydrogène ou un groupement alkyle ayant au moins 1 et au plus 3 atomes de carbone,

[Formule 10]

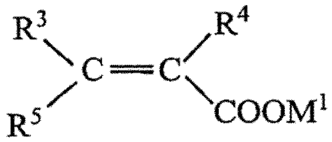

(A2)

dans lequel

$R^3$, $R^4$ et $R^5$ représentent chacun indépendamment un atome d'hydrogène, un groupement méthyle, ou $(CH_2)_{m2}COOM^2$ ;

$M^1$ et $M^2$ représentent chacun indépendamment un atome d'hydrogène, ou un métal alcalin ; et

m2 représente un entier supérieur ou égal à 0 et inférieur ou égal à 2.

**14.** Procédé de production selon la revendication 13, dans lequel la composition d'agent dispersant liquide pour du gypse est destinée à du gypse qui contient de l'acide phosphorique.

**15.** Procédé de production selon la revendication 13 ou 14, dans lequel le composant (A) et le composant (B) sont mélangés selon le rapport massique, (A)/(B), supérieur ou égal à 2 et inférieur ou égal à 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10158051 A
- JP 2003335566 A
- US 3181985 A
- US 5151130 A
- WO 2013137402 A
- GB 2319522 A
- EP 1052232 A
- JP 2003002718 A